(19) Europäisches Patentamt / European Patent Office / Office européen des brevets

(11) **EP 3 983 647 B1**

(12) **FASCICULE DE BREVET EUROPEEN**

(45) Date de publication et mention
de la délivrance du brevet:
**04.01.2023   Bulletin 2023/01**

(21) Numéro de dépôt: **19737200.6**

(22) Date de dépôt: **14.06.2019**

(51) Classification Internationale des Brevets (IPC):
***F01B 9/04*** *(2006.01)*

(52) Classification Coopérative des Brevets (CPC):
**F01B 9/042;** F01B 2009/045; Y02T 10/12

(86) Numéro de dépôt international:
**PCT/IB2019/000512**

(87) Numéro de publication internationale:
**WO 2020/053642 (19.03.2020 Gazette 2020/12)**

(54) **MOTEUR À COMBUSTION INTERNE À TRAIN EPICYCLOÏDALE ET À PISTONS ALTERNATIFS**

VER BRENNUNGSMOTOR MIT EINEM PLANETENGETRIEBESATZ UND HIN- UND HERGEHENDEN KOLBEN

INTERNAL COMBUSTION ENGINE HAVING A PLANETARY GEAR SET AND RECIPROCATING PISTONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(43) Date de publication de la demande:
**20.04.2022   Bulletin 2022/16**

(73) Titulaire: **MELLASSE, Nabil**
**14000 Kenitra (MA)**

(72) Inventeur: **MELLASSE, Nabil**
**14000 Kenitra (MA)**

(74) Mandataire: **Ipside**
**6, Impasse Michel Labrousse**
**31100 Toulouse (FR)**

(56) Documents cités:
**WO-A1-2004/029481        WO-A1-2011/029160**
**WO-A1-2014/037758        US-A1- 2015 247 452**
**US-A1- 2018 163 623**

**Description**

**I. DOMAINE TECHNIQUE**

La présente invention se rapporte aux moteurs à combustion interne, en particulier les moteurs à quatre temps et à pistons alternatifs, permettant de convertir l'énergie thermique dégagée par la combustion d'un système gazeux dans des cylindres en énergie mécanique sous forme d'un couple rotatif disponible à un arbre de sortie. Ce moteur est destiné principalement à être utilisé pour la propulsion des véhicules de transport tel qu'avions, automobiles, camions, bateaux etc. Ainsi que pour les installations fixes telles que les groupes électrogènes.

**II. ETAT DE LA TECHNIQUE ANTERIEURE**

Les moteurs à combustion interne les plus utilisés à l'heure actuelle sont des moteurs à quatre temps et à pistons alternatifs, lesquels comprennent un ou plusieurs cylindres, fermés par une culasse reliant les cylindres à des collecteurs d'admission et d'échappement et équipée de soupapes commandées par un ou plusieurs arbres à cames. A l'intérieur de chaque cylindre coulisse un piston destiné à effectuer des mouvements rectilignes alternatifs. Ces mouvements sont transformés en rotation continue d'un arbre de sortie et réciproquement grâce au système bielle manivelle classique couramment mise en œuvre dans la majorité des moteurs à pistons alternatifs. La culasse et la tête du piston délimitent ainsi une chambre de combustion dont le volume subi une variation cyclique entre un minimum et un maximum, correspondants respectivement aux moments où le piston est au PMH et PMB de sa course. Cette variation cyclique permet de mettre en œuvre les quatre temps d'un cycle moteur, selon le principe de fonctionnement largement connu dans l'état de la technique, et ce, afin de convertir l'énergie thermique dégagée par un système gazeux en combustion en travail mécanique. En outre, la transformation des mouvements alternatifs des pistons par un système tel que celui à bielle manivelle présente un inconvénient majeur : la course de compression étant identique à la celle de détente, la pression dans la chambre de combustion en fin de détente reste toujours supérieur à la pression atmosphérique, ceci dit que l'énergie fourni au piston par le système gazeux en expansion ne peut être entièrement récupérée avant l'ouverture des soupapes d'échappement, du fait que le piston remonte inévitablement après le PMB. Le rendement des moteurs utilisant un tel système de transformation se trouve par conséquent limité. Pour pallier cette limitation, il serait donc judicieux de concevoir un système de transformation des mouvements permettant d'offrir au piston un volume de détente prolongée par rapport à celui de compression, afin de diminuer autant que possible la pression dans la chambre de combustion en fin de détente et profiter ainsi d'avantage de l'énergie fourni par le système gazeux en expansion.

**III. EXPOSE DE L'INVENTION**

La présente invention vise à remédier aux inconvénients que présentent les moteurs à quatre temps et à piston alternatifs connu dans l'état de la technique, en proposant un moteur avec une architecture moins contraignante, particularisée par un système de transformation de mouvements capable d'offrir aux pistons une course de détente prolongée par rapport à celle de compression, en vue de profiter au maximum de l'énergie thermique dégagée par la combustion du carburant.

Pour ce faire est proposé, selon l'invention, un moteur à combustion interne 1 à train épicycloïdale et à pistons alternatifs, comportant :

- Un bloc-cylindres 200 comprenant :

  - un collier 201 étant configuré pour regrouper un nombre de cylindres 210 au moins égale à un, disposés radialement autour d'un axe Z et rigidement reliés au collier 201, les axes desdits cylindres 210 appelés axes principaux du moteur 1 étant perpendiculaires à l'axe Z en un point O, le plan orthogonal à l'axe Z et passant par le point O est appelé plan principal P, chacun desdits cylindres 210 comprend en sa partie supérieure :

    ◦ Au moins deux soupapes 211, l'une des deux soupapes 211 étant une soupape d'admission et l'autre des deux soupapes 211 étant une soupape d'échappement, chacune desdites soupapes 211 est guidée en translation suivant son axe dans le cylindre 210 et étant maintenue fermée moyennant un ressort 214 monté entre le cylindre 210 et une coupelle 212 butant contre la tige de la soupape 211 par l'intermédiaire d'une clavette 213, ledit ressort 214 étant destiné à exercer une force de rappel sur la coupelle 212 de manière à maintenir la soupape 211 fermée,

    ◦ Au moins deux culbuteurs 215 reliés cinématiquement au cylindre 210 aptes à coopérer par contact avec les soupapes 211 et étant agencés de manière à déformer le ressort 214 pour assurer l'ouverture des soupapes 211, chaque culbuteur 215 est solidaire à une tige 216 par un système de fixation permettant un réglage de leur position relative.

- A l'intérieur de chacun desdits cylindres 210 coulisse un piston 202 guidé en translation coaxiale dans le cylindre 210 correspondant et étant destiné à effectuer des mouvements de translation alternatifs, la tête du piston 202 et le fond du cylindre 210 correspondant délimitent une chambre de combustion dans laquelle se produisent les quatre temps d'un cycle moteur, le volume de ladite chambre de combustion étant variable entre un minimum, atteint à un moment du cycle correspondant à une position du piston 202 appelée point mort haut PMH et un maximum atteint à un moment du cycle correspondant à une position du piston 202 appelée point bas PB, chaque chambre de combustion étant alimentée par un système d'admission d'un gaz comburant et d'un carburant et étant en communication avec un système d'échappement des gaz brulés,

- Un dispositif monté entre chacun des pistons 202 et le cylindre 210 correspondant permettant d'assurer l'étanchéité de la chambre de combustion : les segments usuels des pistons connus dans l'état de la technique est un exemple dudit dispositif, généralement trois segments sont situés en haut du piston à savoir un segment coupe-feu, un segment d'étanchéité ou de compression et un segment racleur,

- Une tige 203 solidaire du piston 202 et agencée pour se déplacer en translation longitudinale le long de l'axe du piston 202 correspondant,

• Au moins une came radiale 305 guidée en rotation autour de l'axe Z agencée pour être entrainée en rotation par au moins un des organes tournants du moteur 1 et étant destinée à actionner sur chacun des culbuteurs 215 moyennant un dispositif comportant au moins :

- un suiveur 306 guidé en translation par rapport à son axe, apte à coopérer par contact avec ladite came 305 et étant destiné à emprunter un chemin de came,

- une tige-culbuteur 307 monté entre le suiveur 306 et la tige 216 et étant agencé de manière à transmettre les mouvements de déplacement du suiveur 306 au culbuteur 215 pour commander l'ouverture des soupapes 211 en synchronisation avec la rotation du moteur 1

la came 305 est dotée d'au moins deux profils extérieurs distincts, un premier profil commandant l'ouverture les soupapes d'admission et un second profil commandant l'ouverture de celles d'échappement.

La disposition des cylindres ainsi que le système de distribution décrit ci-avant est connu dans l'état de la technique dans les moteurs dits en étoile, selon lesquels des cylindres sont placés sur un même plan autour d'un vilebrequin comportant un seul maneton, auquel est connectée l'une des bielles dite bielle maîtresse et sur laquelle viennent s'articuler les bielles dites secondaires. La transformation de mouvements linéaires alternatifs des pistons en mouvement de rotation continue du vilebrequin dans le moteur en étoile ainsi que la majorité des moteurs à pistons utilisés à l'heure actuelle est assuré par le système bielle manivelle classique, dans le cas du moteur 1 selon la présente invention, cette transformation de mouvements est assurée par un système, autre que le celui à bielle manivelle, simple à réaliser comportant :

• Au moins une unité active 100 comprenant un ensemble d'organes agencés de manière à former un train épicycloïdal comportant au moins :

- un planétaire couronne 101 monté coaxialement par rapport à l'axe Z étant rigidement lié ou issu de matière du collier 201 et étant situé sur un premier côté du plan principal P

- un satellite 102 dont l'axe est parallèle à l'axe Z comportant au moins une première denture apte à engrener avec le planétaire couronne 101 et étant maintenu sur son orbite moyennant un porte-satellite 103 guidé en rotation autour de l'axe Z, le satellite 102 est relié à une première extrémité de son axe avec le porte-satellite 103 par une liaison pivot, le diamètre primitif de la première denture du satellite 102 étant égale au rayon primitif du planétaire couronne 101

- l'unité active 100 comprend encore une bielle 104 fixée sur l'axe du satellite 102 par un moyen de fixation assurant une liaison rigide et complète : une liaison à cannelures est un exemple dudit moyen de fixation.

La bielle 104 dispose d'un nombre de manetons I égale au nombre des axes principaux du moteur 1, les axes desdits manetons I sont parallèles à l'axe du satellite 102, passent par le cercle primitif de la première denture du satellite 102 et disposés de manière à ce que, quand le porte-satellite 103 tourne autour de l'axe Z, la projection de l'axe de chacun des manetons I sur le plan principal P effectue un mouvement rectiligne alternatif le long d'un axe principal du moteur 1 en décrivant un segment, appelé chemin du maneton I, dont le centre est le point O et dont la longueur est égale au diamètre primitif du planétaire couronne 101,
l'unité active 100 étant destinée à coopérer par contact par l'intermédiaire des manetons I avec les tiges 203 pour effectuer une transformation réversible des mouvements de translation alternatifs des pistons 202 du bloc-cylindres 200 en mouvement de rotation continu du porte-satellite 103.

- Au moins une unité passive 300 comprenant un ensemble d'organes agencés de manière à former un train épicycloïdal comportant au moins :

  - un planétaire couronne 301 monté coaxialement par rapport à l'axe Z et étant rigidement lié ou issu de matière du collier 201 et étant situé sur le côté opposé au premier côté du plan principal P,

  - un satellite 302 dont l'axe est parallèle à l'axe Z comportant au moins une denture apte à engrener avec le planétaire couronne 301 et étant maintenu sur son orbite moyennant un porte-satellite 303 guidé en rotation autour de l'axe Z, le satellite 302 est relié à une première extrémité de son axe avec le porte-satellite 303 par une liaison pivot, le diamètre primitif de la denture du satellite 302 étant égale au rayon primitif du planétaire couronne 301, le porte-satellite 303 est agencé pour être entrainé en rotation par au moins un des organes tournants de l'unité active 100,

  - l'unité passive 300 comprend encore une bielle 304 fixée sur l'axe du satellite 302 par un moyen de fixation assurant une liaison rigide complète : une liaison à cannelures est un exemple dudit moyen de fixation.

La bielle 304 dispose d'un nombre des manetons I' égale au nombre des axes principaux du moteur 1, les axes desdits manetons I' sont parallèles à l'axe du satellite 302, passent par le cercle primitif de la denture du satellite 302 et disposés de manière à ce que quand le porte-satellite 303 tourne autour de l'axe Z, la projection de l'axe de chacun des manetons I' sur le plan principal P effectue un mouvement rectiligne alternatif le long d'un axe principal du moteur 1 en décrivant un segment, appelé chemin du maneton I', dont le centre est le point O et de longueur égale au diamètre primitif du planétaire couronne 301,
l'unité passive 300 étant destinée à coopérer par contact, par l'intermédiaire des manetons I' avec les tiges 203 pour assurer une transformation de mouvement de rotation continu du porte-satellite 303 en mouvements de translation alternatifs des pistons 202 du bloc-cylindres 200

- un arbre de sortie 105 guidé en rotation autour de l'axe Z et agencé pour être entrainé en rotation par au moins un des organes tournants du moteur 1

Le moteur 1 selon l'invention étant un moteur à combustion interne et à piston alternatifs dont le cycle de fonctionnement se décompose en quatre temps : la compression, la détente, l'échappement et l'admission. Le mouvement du piston est initié par la combustion d'un mélange de carburant et de comburant qui a lieu durant le temps moteur. C'est le seul temps produisant de l'énergie, les trois autres temps en consomment mais le rendent possible. Le piston se déplace pendant le démarrage grâce à une source d'énergie externe souvent un démarreur ou un lanceur couplé temporairement à l'arbre de sortie jusqu'à ce qu'au moins un temps moteur produise une force capable d'assurer les trois autres temps avant le prochain temps moteur. Le moteur fonctionne dès lors d'une manière autonome et produit un couple sur son arbre de sortie.
Suivant un mode de réalisation préféré, la mise en œuvre des quatre temps du cycle se répartie sur les deux unités du moteur 1 de la manière suivante : l'unité active 100 actionne les pistons 202, moyennant la bielle 104, pour assurer la compression des gaz dans les cylindres correspondants et transforme ensuite le travail fourni par le système gazeux pendant la détente en un couple rotatif à l'arbre de sortie 105, une partie dudit travail est consacré à l'entrainement en rotation des organes tournants de l'unité passive 300, qui à son tour actionne les pistons 202 moyennant la bielle 304 pour assurer les deux autres temps restants : l'échappement et l'admission.
Suivant un mode de réalisation, la tige 203 est solidaire du piston 202 grâce à deux goupilles 204 dont les axes sont parallèles à l'axe Z, la tige 203 dispose d'un premier et d'un second appui ayant chacun une forme demi-cylindrique ouvert dont l'axe est parallèle à l'axe Z et étant aptes à coopérer par contact respectivement avec les manetons I et I' empruntant des chemins le long de l'axe principal du piston 202 correspondant à ladite tige 203, la tige 203 étant désolidarisée des bielles 104 et 304 apte à coopérer avec lesdits manetons I et I' par simple poussée et d'une manière spontanée lors de la détente, la compression et l'échappement, phases auxquelles la tige (203) est sollicitée en compression.

De préférence, le diamètre de chacun desdits appuis est identique au diamètre du maneton avec lequel il coopère, et ce pour offrir un maximum de surface de contact afin d'éviter la concentration des contraintes pendant leur interaction. Par ailleurs, Il est clair que ce mode d'interaction ne permet que la transmission des efforts auxquels la tige 203 et les manetons se repoussent, autrement dit, les manetons ne peuvent en aucun cas tirer la tige 203, vu la forme ouvert de ses appuis. Pendant l'admission, le seul cycle où il est nécessaire de tirer le piston 202 pour l'aspirer l'air, il est indispensable de prévoir un mécanisme d'accrochage, destiné à établir une liaison entre la tige 203 et la bielle 304, permettant à cette dernière de tirer le piston 202 afin de créer la dépression nécessaire à l'aspiration des gaz et à libérer ladite liaison au plus tard au début de la compression.

Suivant un mode de réalisation, le mécanisme de d'accrochage comprenant une rainure taillée sur une surface de la bielle 304 parallèle au plan principal P, débouchant d'un premier côté appelé côté d'entrée et d'un second côté appelé côté de sortie, et un doigt solidaire ou issu de matière de la tige 203 apte à coulisser dans ladite rainure pendant la phase d'admission, la rainure est configurée de manière à ce que ledit doigt rentre à travers le côté d'entrée au plus tard au début de la phase d'admission et sorte à travers le côté de sortie au plus tard au début de la compression :

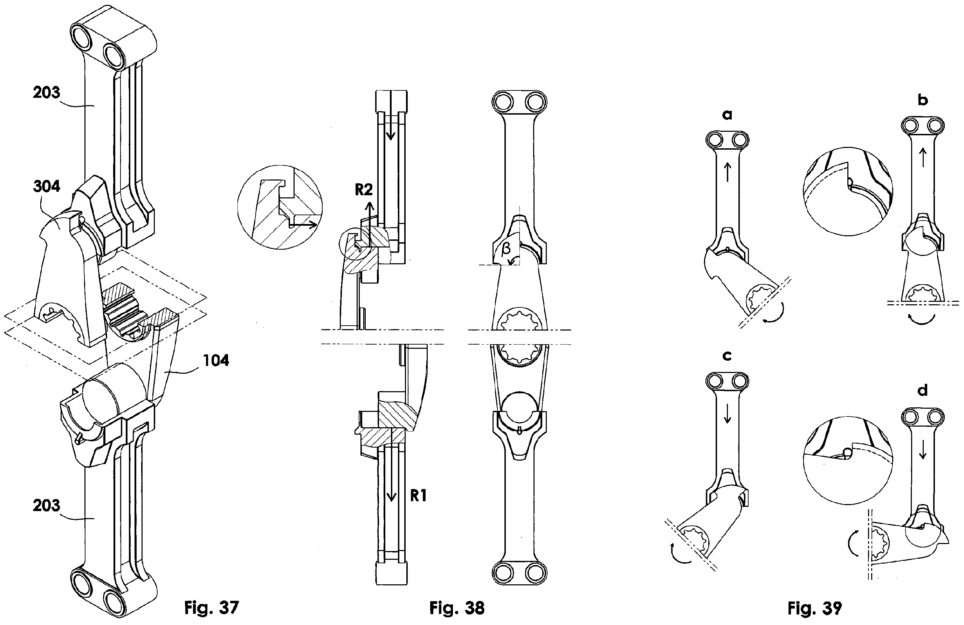

Il est judicieux de constater que l'angle que fait la bielle 304 avec la tige 203 varie en fonction de la position du maneton correspondant, cela offre la possibilité de limiter la liaison établie par le mécanisme d'accrochage que pendant l'admission, et ce en variant juste l'intervalle angulaire β de la rainure précitée par rapport à l'axe du maneton (voir figure 38).

Par exemple la figure 39 met en évidence les différentes positions relatives entre la bielle 304 et la tige 203 durant l'échappement puis l'admission dans le cas où $\beta = 90°$ :

- **Position a** : la bielle 304 repousse la tige 203 vers le PMH pendant la phase d'échappement, la liaison entre les deux pièces n'est pas nécessaire

- **Position b** : le piston 202 atteint son PMH, le maneton étant en contact avec la tige 203, le doigt rentre dans la rainure à travers le coté d'entrée en aval du PMH

- **Position c** : La liaison entre la tige 203 et la bielle 304 étant établie, permettant de tirer le piston pour assurer l'admission

- **Position d** : le doigt sort de la rainure à travers le coté de sortie, la bielle relâche la tige du piston au plus tard au début de la compression

L'ensemble des organes tournants de l'unité passive 300 étant aptes à être entrainés par au moins un des organes tournant de l'unité active 100, suivant un mode de réalisation préféré : chacun des satellites 102 et 302 est relié à la seconde extrémité de son axe avec le porte-satellite de l'unité opposée par une liaison pivot, autrement dit, chacun des satellites 102 et 302 est guidé en rotation autour de son axe à la fois par les deux porte-satellites 103 et 303, il en résulte que les deux satellite 102 et 302 gravitent autour de l'axe Z au même sens et à la même vitesse de rotation.

Les quatre temps du cycle se produisent dans chacun des cylindres 210 d'une manière spontané selon le principe de fonctionnement suivant : le maneton I de la bielle 104 entre en contact avec le premier appuis de la tige 203 d'un piston 202 au moment d'achèvement de l'admission en un premier point de son chemin appelé premier point de basculement PPB caractérisant le début de la phase de compression et repousse ledit piston 202 jusqu'à atteindre son point culminant au PMH auquel la vitesse dudit maneton I s'annule et auquel la compression est maximale, la combustion du mélange comburant/carburant ayant lieu au voisinage du PMH, les gaz chauds en expansion repoussent ledit piston 202, qui à son tour repousse ledit maneton I moyennant la tige 203, jusqu'à atteindre la fin de la détente où ladite tige 203 et ledit maneton I se séparent en un second point appelé second point de basculement SPB, caractérisant le début de la phase d'échappement.

Un maneton I' de la bielle 304 entre en contact avec le second appuis de la tige 203 au moment auquel ledit maneton I est au second point de basculement SPB, mettant fin à la phase de détente, et repousse ledit piston 202 pour chasser les gaz brulés à travers le système d'échappement jusqu'à atteindre le PMH moment auquel la vitesse dudit maneton I' s'annule, la liaison entre la tige 203 et la bielle 304 étant établie moyennant le système d'accrochage, permettant à la bielle 304 de tirer le piston 202 pour assurer la phase d'admission jusqu'au moment auquel ledit maneton I atteint le premier point de basculement PPB où ladite liaison entre la tige 203 et la bielle 304 est libérée.

la course du piston 202 est ainsi égale à la distance parcourue entre le PMH et le PB correspondant au second point de basculement SPB, cette distance vaut au moins le rayon primitif du planétaire 101, une course égale au rayon primitif du planétaire 101 est appelée course de référence et le volume balayé par le piston 202 parcourant ladite course de référence est appelé volume de référence.

Par ailleurs, il est judicieux de mettre l'accent sur le mode de transmission des efforts entre les manetons des bielles 104 et 304 et la tige 203 lors des différentes phases du cycle moteur. Sur la figure 38, il est représenté la résultante, notée R1, des efforts de contact exercées par le maneton I de la bielle 104 sur la tige 203. Etant donné que la résultante des forces de pression, exercée par le système gazeux sur le piston 202 durant la détente est considérable, de préférence, cette dernière est colinéaire avec la résultante R1, et ce, afin d'éviter le moment engendré par l'excentrement desdites résultantes, qui peut provoquer des effets indésirables : frottement, usure des segments, arc-boutement etc. La longueur du maneton est déterminée, en conséquence, de manière à pouvoir offrir une surface de contact suffisante apte à remplir ladite condition de colinéarité.

Néanmoins, les efforts exercés par le maneton I' de la bielle 304 sur la tige 203 engendrent inévitablement un moment parasite, dû à l'excentrement de leurs résultante, notée R1 (voir figure 38). Pour équilibrer ce moment parasite, suivant un mode de réalisation, la tige 304 est guidée en translation dans le collier 201 ou dans l'un des organes y solidaires.

suivant un autre mode de réalisation, chacun des manetons I' de la bielle 304 dispose d'une saignée circulaire dans laquelle se loge une longuette issue de la tige 203, permettant d'offrir une surface d'appuis orthogonale à celle de la résultante R2, capable d'engendrer des efforts de contact s'opposant audit moment d'excentrement : voir détail de la figure 38.

Suivant un mode de réalisation préféré, l'arbre de sortie 105 est guidé en rotation dans le planétaire couronne par un dispositif de guidage en rotation 107, et rigidement relié sur l'un de ses extrémités à un pignon solaire 106, le satellite 102 comporte une seconde denture apte à engrener avec le pignon solaire 106, l'arbre de sortie 105 étant destiné, d'une part, à être entrainé en rotation autour de l'axe Z par le satellite 102 et d'autre part, à assurer le guidage en rotation du porte-satellite 103.

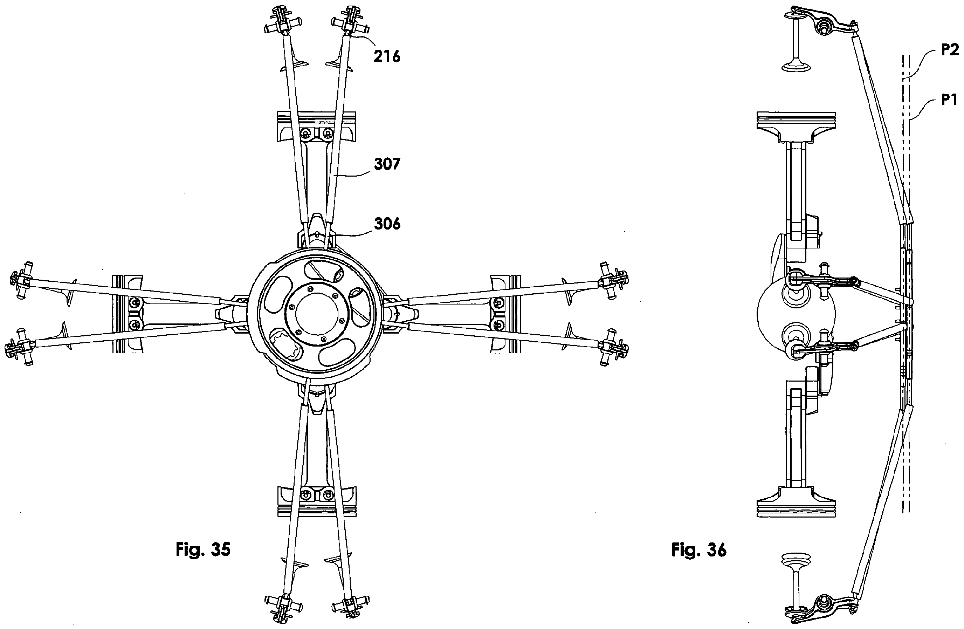

Suivant un mode de réalisation, la came radiale 305 est rigidement reliée au porte-satellite 303, l'ensemble est guidé en rotation autour de l'axe Z par un arbre rigidement relié ou issu de matière du planétaire 301, la came 305 étant apte à être entrainée en rotation par le porte-satellite 303, coopère par contact avec les suiveurs 306 guidé en translation dans le planétaire 301 et disposés radialement autour de l'axe Z de la manière suivante : les suiveurs commandant l'ouverture des soupapes d'admission sont uniformément répartis autour de l'axe Z dans un premier plan P1, parallèle au plan principal P et passant par le premier profil extérieur de la came 305. De la même façon, les suiveurs commandant l'ouverture des soupapes d'échappement sont uniformément répartis autour de l'axe Z dans un deuxième plan P2 passant par le second profil extérieur de la came 305 et étant parallèlement décalé par rapport au premier plan P1 : tel que illustré par la figure 36. Chacun des tige-culbuteurs 307 est reliée sur ses extrémités à la tige 216 et au suiveur 306 correspondants par une liaison sphérique. Les figures 35 et 36 mettent en évidence l'ensemble des pièces qui entrent en jeu pour assurer l'ouverture des soupapes d'admission et d'échappement en synchronisation avec les mouvements des pistons.

Selon un premier aspect, le moteur 1 selon l'invention comporte quatre cylindres 210 uniformément répartis autour de l'axe Z de manière à ce que chaque axe principal soit un axe commun à deux cylindres opposés, les deux axes principaux sont appelés X et Y et étant perpendiculaires au point O. La bielle 104 dispose ainsi de deux manetons I et J dont les axes sont symétriques par rapport à l'axe du satellite 102, et agencée de manière à ce que les chemins des manetons I et J appartiennent respectivement aux axes principaux X et Y. de la même manière, la bielle 304 dispose de deux manetons I' et J' dont les axes sont symétriques par rapport à l'axe du satellite 302, et agencée de manière à ce que les chemins des manetons I' et J' appartiennent respectivement aux axes principaux X et Y.

## IV. DESCRIPTION SOMMAIRE DES DESSINS

D'autres caractéristiques, détails et avantages de l'invention ressortiront plus clairement à la lecture de la description détaillée de plusieurs modes de réalisation particuliers de l'invention, donnés ci-après uniquement à titre illustratif et non limitatif, en référence aux dessins annexés, dans lesquelles on a illustré la présente invention selon un premier aspect dans lequel le moteur selon l'invention comporte quatre cylindres uniformément répartis autour de son axe, qui illustrent :

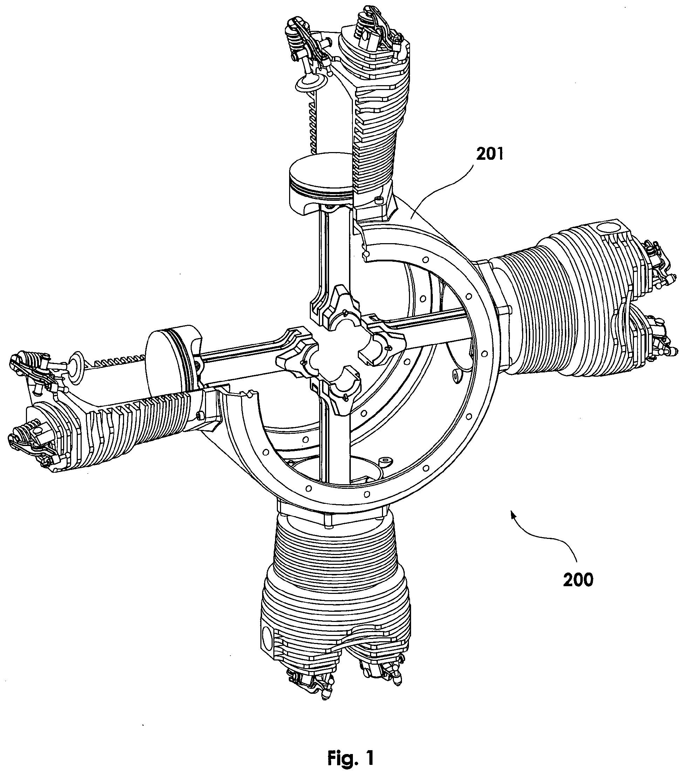

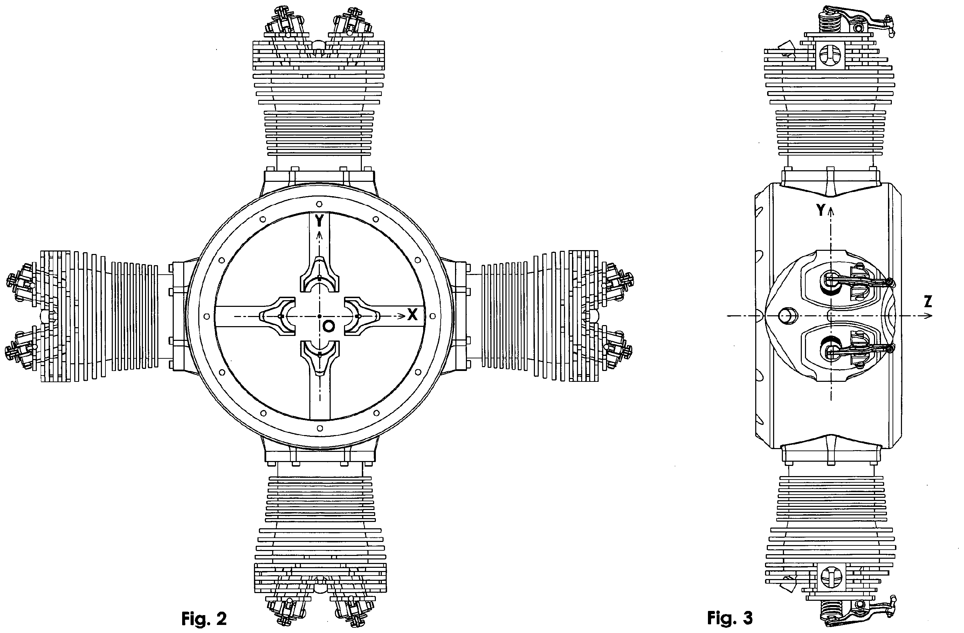

- Les figures 1, 2 et 3, montrent une vue en perspective et des différentes vues du bloc-cylindres

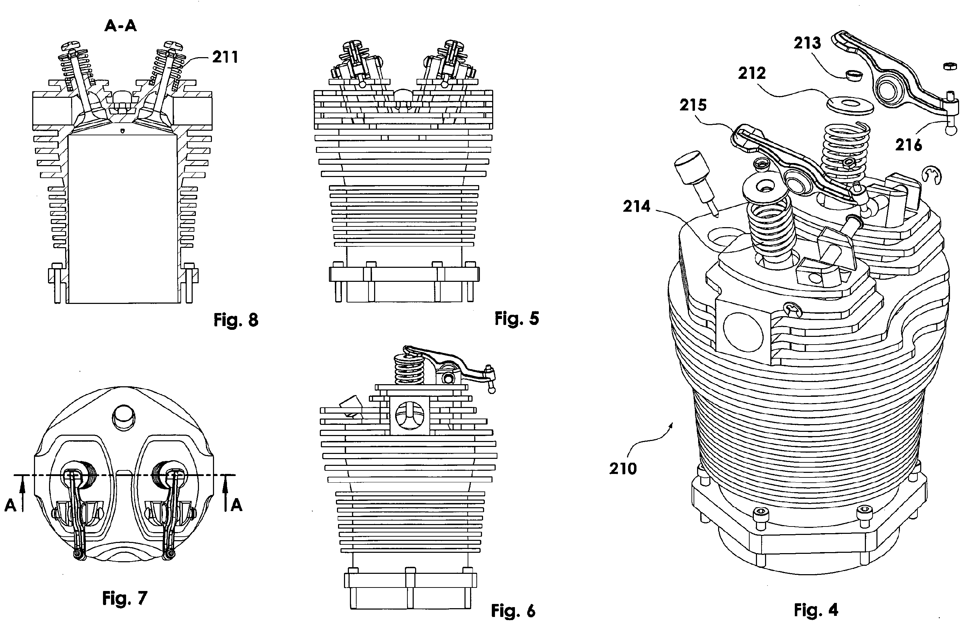

- Le figure 4, montre une vue éclatée en perspective du cylindre

- Les figures 5, 6 et 7, montrent des différentes vues du cylindre

- Le figure 8, montre une vue en coupe du cylindre

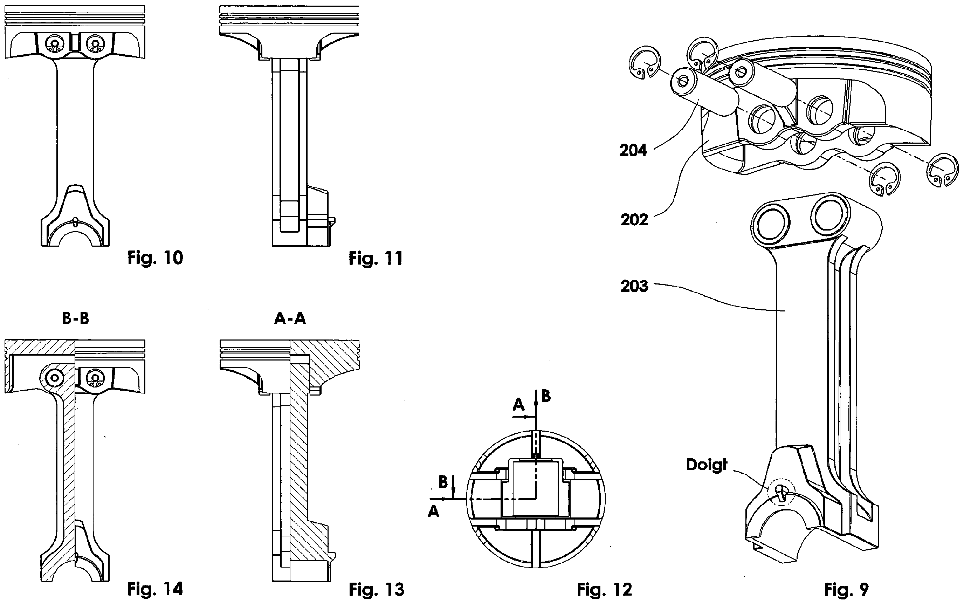

- Le figure 9, montre une vue éclatée en perspective du piston rigidement relié à sa tige suivant un mode de réalisation préféré

- Les figures 10,11 et 12, montrent des différentes vues du piston et sa tige

- Les figures 13 et 14, montrent des différentes vues en coupe du piston et sa tige

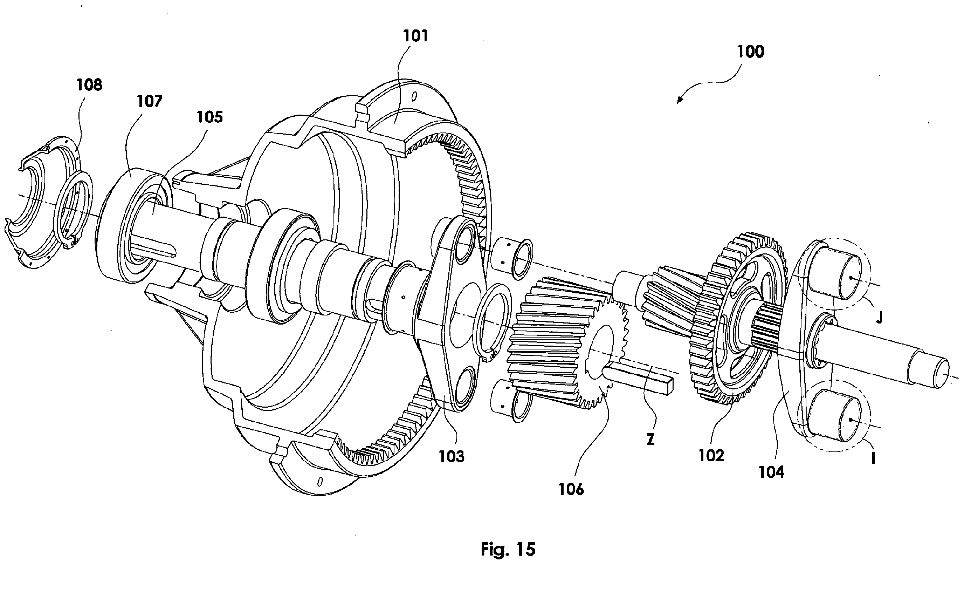

- La figure 15, montre une vue éclatée en perspective de l'unité active suivant un mode de réalisation préféré, avec une coupe de 120° sur le planétaire afin de mettre en évidence l'ensemble des organes cachés.

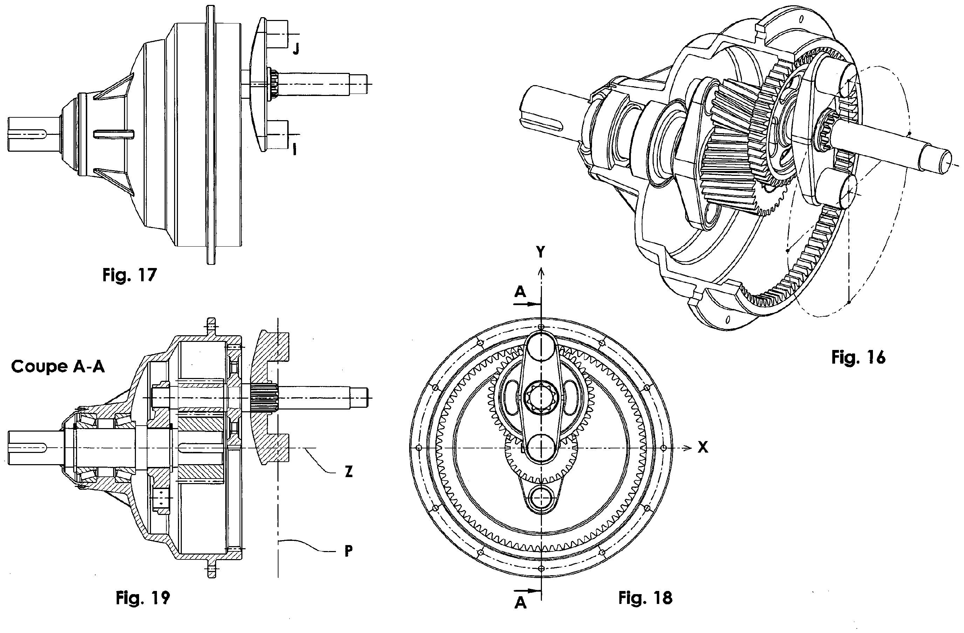

- La figure 16, montre une vue perspective de l'unité active, avec une coupe de 120° sur le planétaire et afin de mettre en évidence l'ensemble des organes cachés.

- Les figures 17, 18 et 19, montrent des différentes vues et une vue en coupe de l'unité active en illustrant les positions des axes principaux et du plan principal du moteur selon l'invention

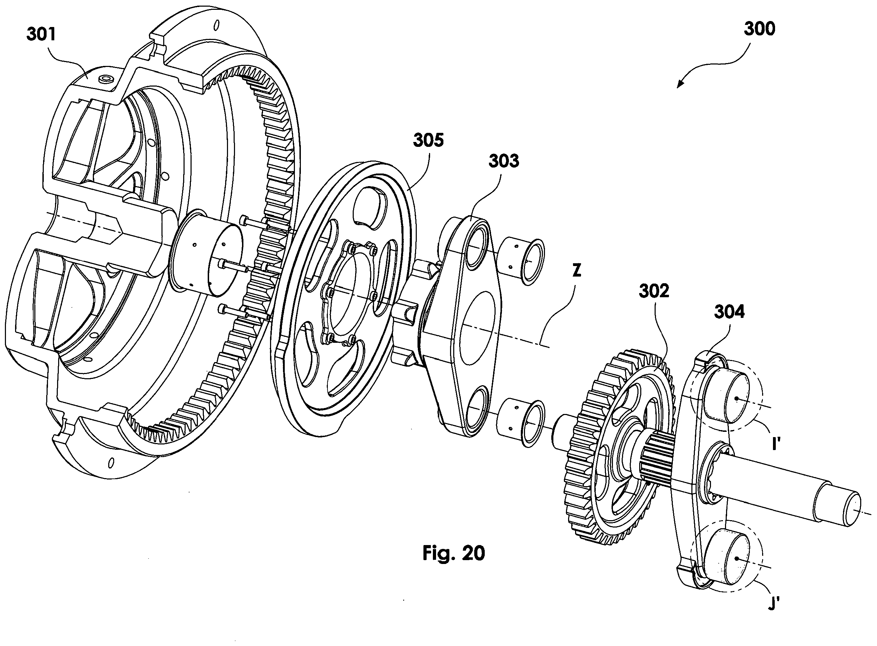

- La figure 20, montre une vue éclatée en perspective de l'unité passive suivant un mode de réalisation préféré, avec une coupe de 120° sur le planétaire afin de mettre en évidence l'ensemble des organes cachés

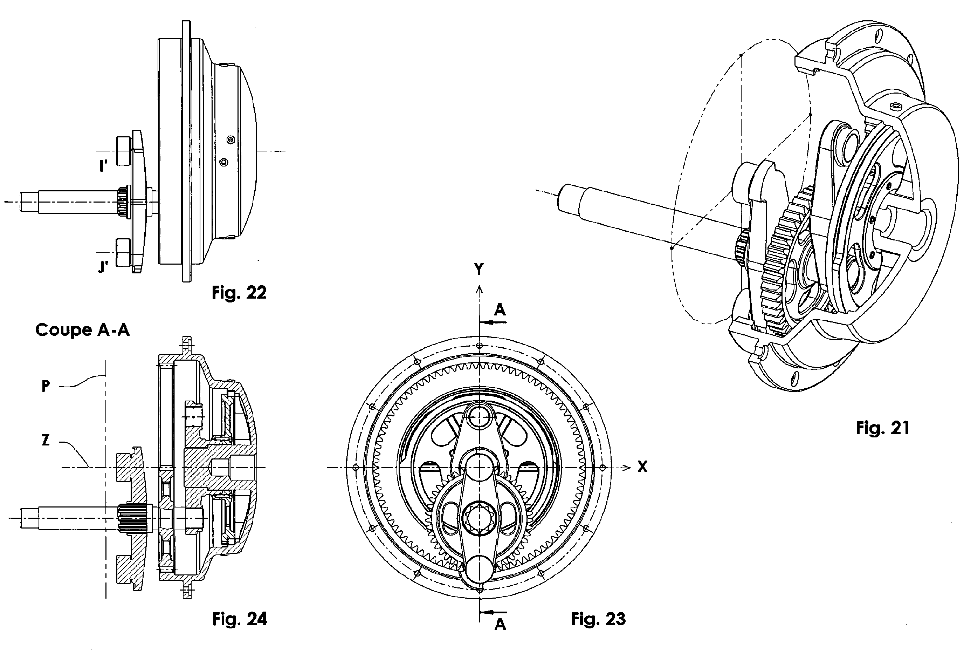

- La figure 21, montre une vue en perspective de l'unité passive, avec une coupe de 120° sur le planétaire et le couvercle afin de mettre en évidence l'ensemble des organes cachés.

- Les figures 22, 23 et 24, montrent des différentes vues et une vue en coupe de l'unité passive en illustrant les positions des axes principaux et du plan principal du moteur selon l'invention

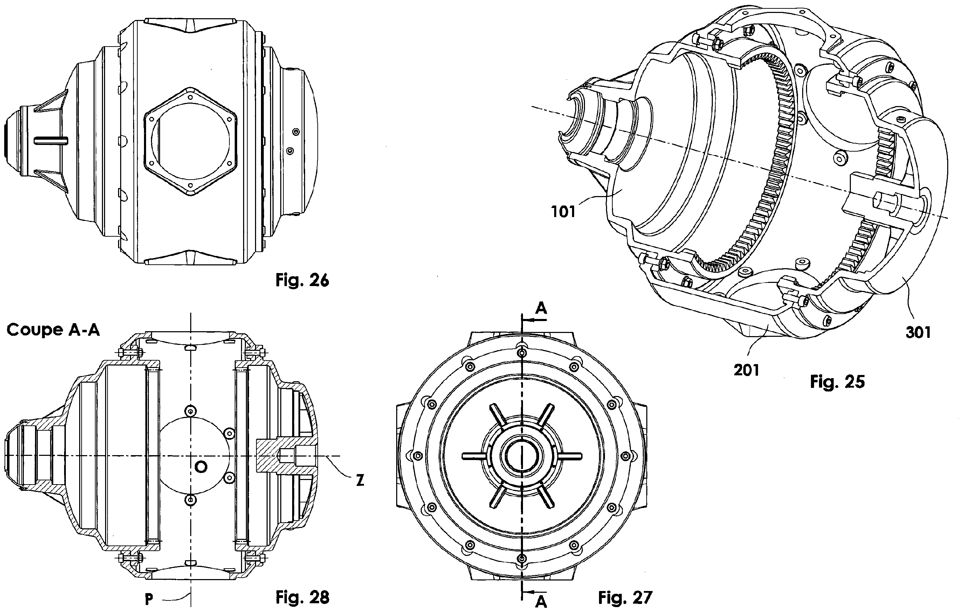

- La figure 25, montre une vue perspective des planétaires des unités active et passive, chacun est rigidement relié au collier du bloc-cylindres, suivant un mode de réalisation

- Les figures 26, 27 et 28, montrent des différentes vues et une vue en coupe des planétaires des unités active et passives et du collier du bloc-cylindres, en illustrant la position du plan principal

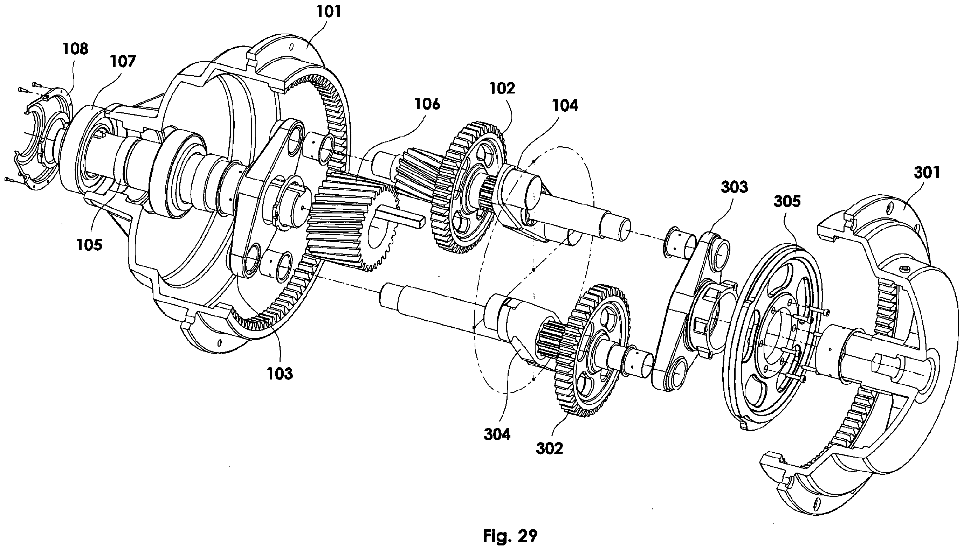

- La figure 29, montre une vue éclatée en perspective des unités active et passive, suivant un mode de réalisation préféré, mettant en évidence leurs positionnement par rapport aux axes principaux

- La figure 30, montre une vue perspective des unités active et passive, avec une coupe de 120° sur les planétaires afin de mettre en évidence l'ensemble des organes cachés

- Les figure 31, 32 et 33, montrent respectivement le schéma cinématique, une vue et une vue en coupe des unités active et passive

- La figure 34, montre une vue en perspective du moteur suivant un premier mode de réalisation de l'invention

- Les figures 35 et 36 illustrent, suivant un mode de réalisation, le système de distribution du moteur selon l'invention

- Les figures 37, 38 et 39 illustrent, suivant un mode de réalisation, le principe d'interaction des bielles des unités active et passive avec la tige du piston, en particulier le principe de fonctionnement du système d'accrochage destiné à établir une liaison entre la bielle de l'unité passive et ladite tige durant l'admission

- Les figures 40 à 45 illustrent le principe de la mise en œuvre les quatre temps d'un cycle dans les cylindres par le moteur suivant un premier mode de réalisation de l'invention

- La figure 46 montre une représentation schématique du système de transformation des mouvements des piston du moteur selon l'invention

- Les figures 47, 48 et 49, montrent des vues en coupe et en perspective des porte-satellites des unités active et passive du moteur suivant un deuxième mode de réalisation de l'invention

- La figure 50 montre la bielle de l'unité passive du moteur suivant ledit un deuxième mode de réalisation de l'invention

- La figure 51 montre la came radiale du moteur suivant ledit un deuxième mode de réalisation de l'invention

- La figure 52 montre une vue en perspective illustrant le positionnement des organes mobiles des unités active et passive par rapport aux axes principaux du moteur suivant ledit un deuxième mode de réalisation de l'invention

- Les figures 53 à 60 illustrent le principe de la mise en œuvre les quatre temps d'un cycle dans les cylindres par le moteur suivant ledit un deuxième mode de réalisation de l'invention

- La figure 61 montre la tige du piston du moteur suivant un meilleur mode de réalisation de l'invention, en mettant en évidence la distance séparant son premier et son second appuis

- La figure 62 montre la bielle et le satellite de l'unité passive du moteur suivant ledit un meilleur mode de réalisation de l'invention

- Les figures 63, 64 montrent des vues en coupe des porte-satellites des unités active et passive du moteur suivant ledit un meilleur mode de réalisation de l'invention

- La figure 65 montre la came radiale du moteur suivant ledit un meilleur mode de réalisation de l'invention

- La figure 66, montre une vue en perspective des planétaires des unités active et passives et du collier du bloc-cylindres du moteur suivant ledit un meilleur mode de réalisation de l'invention

- Les figures 67, 68 et 69, montrent des différentes vues et une vue en coupe des planétaires des unités active et passives et du collier du bloc-cylindres, en mettant en évidence les diamètres primitifs desdits planétaires suivant ledit un meilleur mode de réalisation de l'invention

- Les figures 70 et 71 montrent des vues en face et en perspective des organes mobiles du moteur suivant ledit un meilleur mode de réalisation de l'invention

- La figure 72, montre une vue en perspective du moteur suivant ledit un meilleur mode de réalisation de l'invention

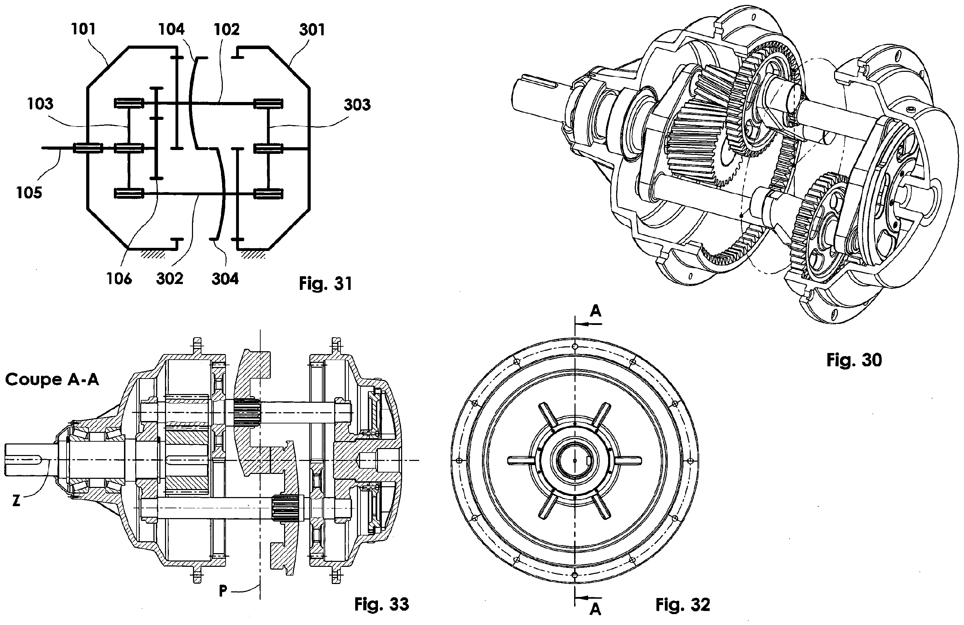

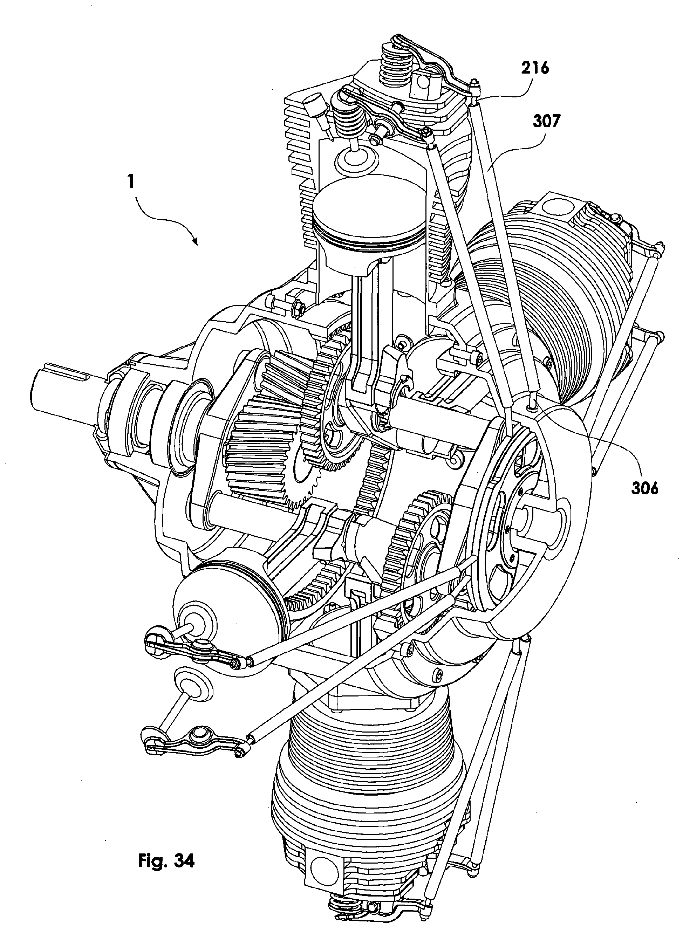

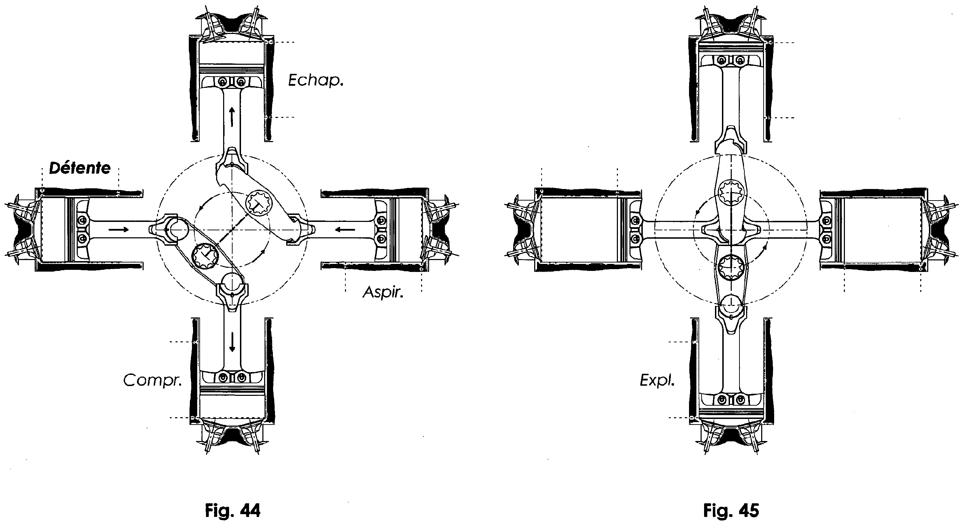

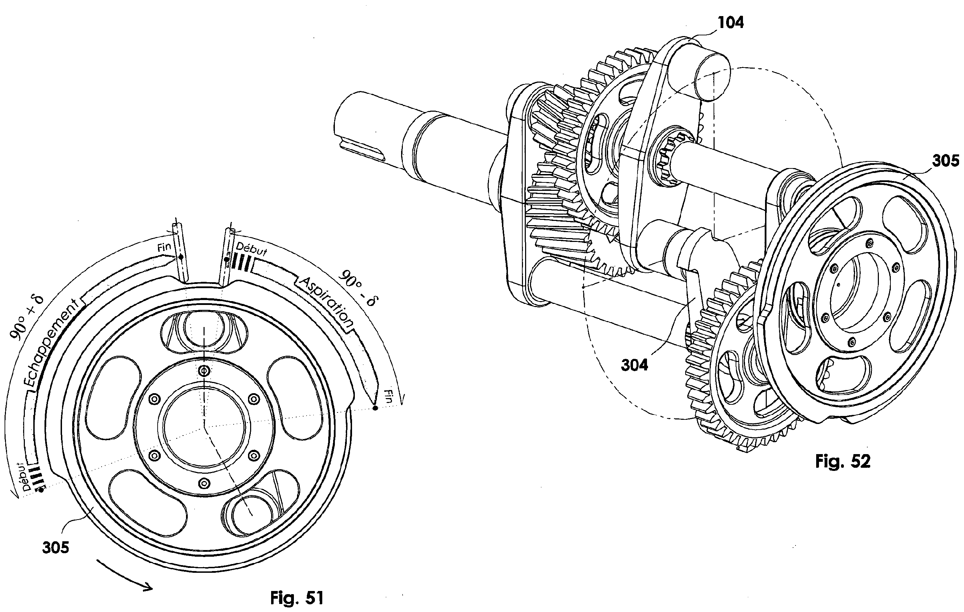

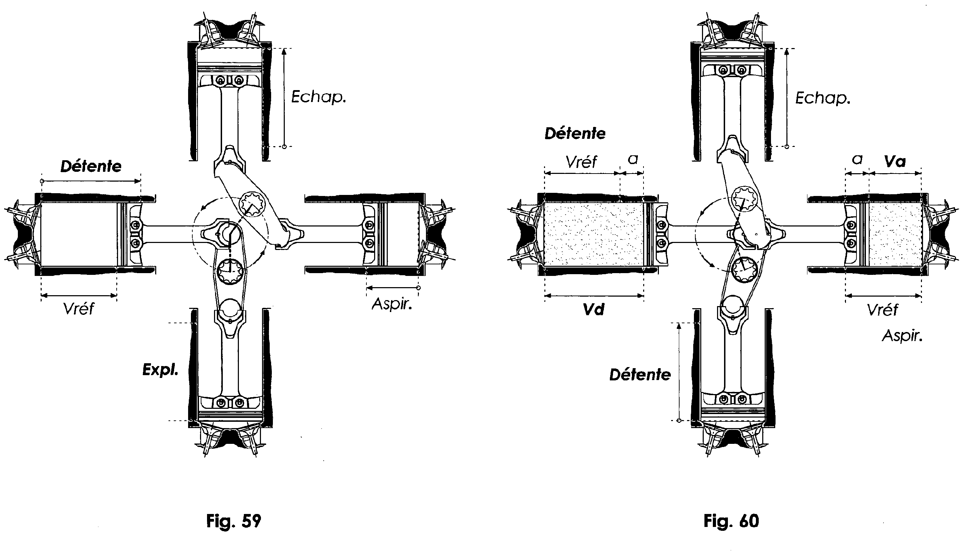

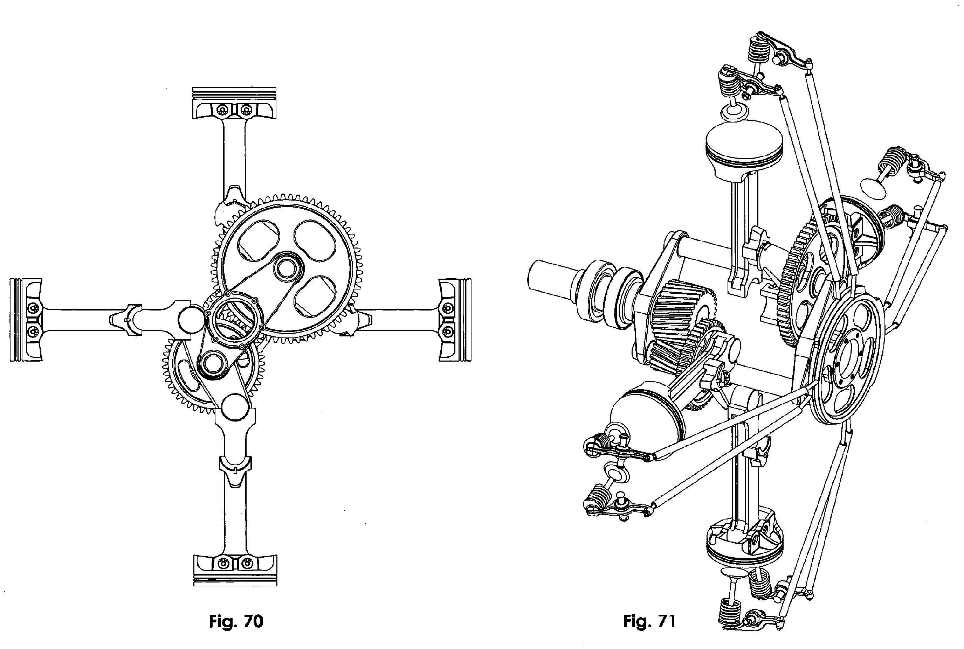

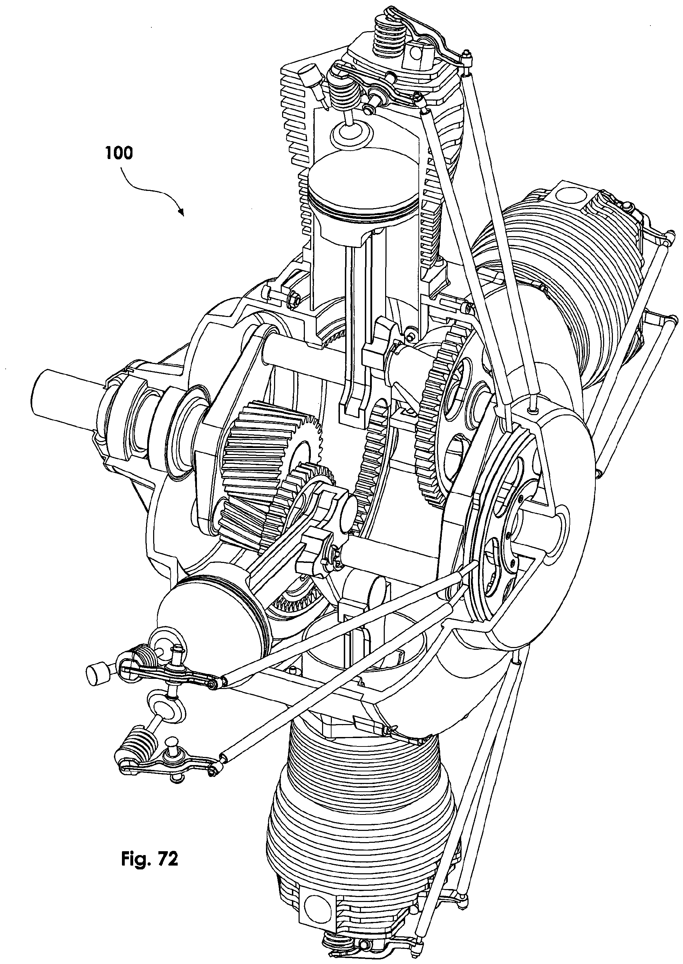

- Les figures 33 à 80 illustrent le principe de la mise en œuvre les quatre temps d'un cycle dans les cylindres par le moteur suivant ledit un meilleur mode de réalisation de l'invention

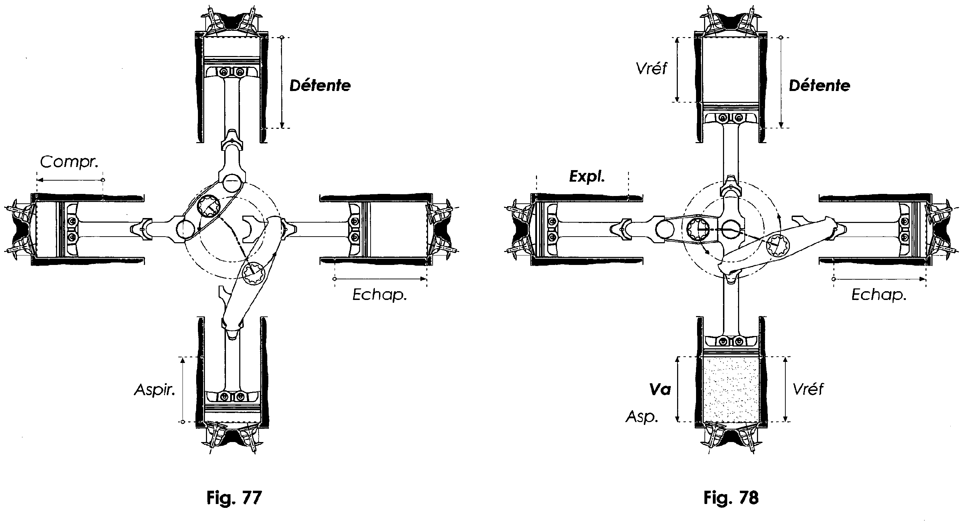

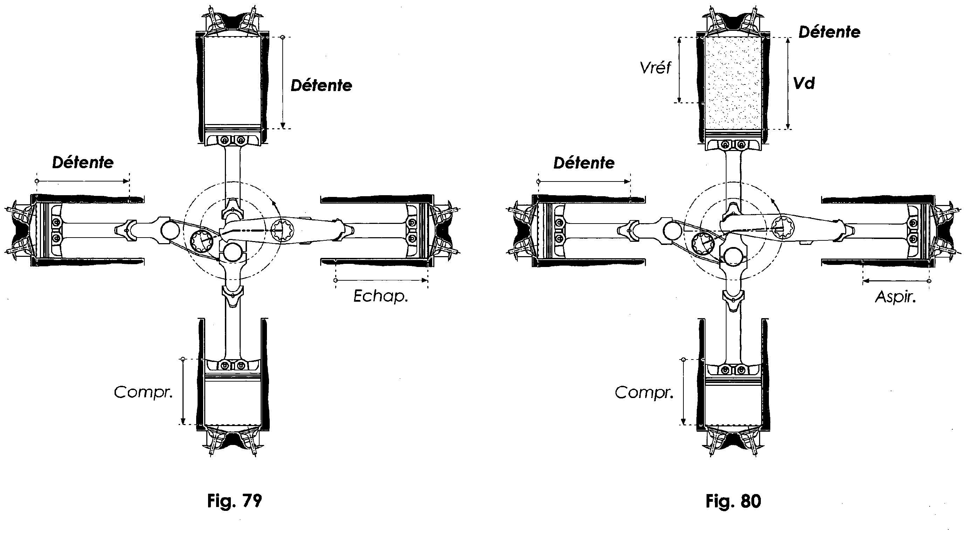

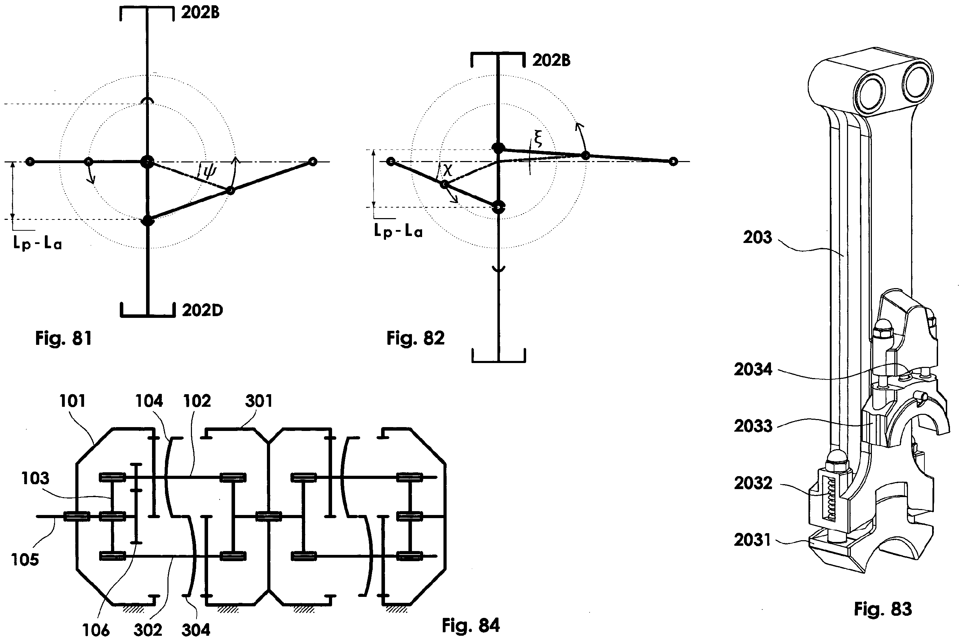

- La figure 81 et 82 montrent respectivement des représentations schématiques des figures 78 et 80

- La figure 83, montre une vue en perspective de la tige du piston avec un dispositif d'amortissement des chocs suivant un mode de réalisation

- La figure 84, montre le schéma cinématique du couplage, suivant un mode de réalisation, de deux moteurs selon l'invention

Il est nécessaire de noter que si les figures exposent l'invention de manière détaillée pour sa mise en œuvre, elles peuvent également servir à mieux définir l'invention le cas échéant. On comprendra également que les modes de réalisation de l'invention illustrés par les figures sont donnés à titre d'exemple non limitatif. Par conséquent, d'autres modes de réalisation suivant d'autres aspects du moteur selon l'invention peuvent être réalisées, notamment par variations du rapport de diamètres primitifs des planétaires des unités active et passive et de la disposition des axes des satellites autour de l'axe du moteur

Pour plus de clarté, les éléments identiques ou similaires sont repérés par des signes de référence identiques sur l'ensemble des figures.

## V. DESCIPTION DETAILLEE DES MODES DE REALISATION DE L'INVENTION

Le moteur 1 selon l'invention, grâce son architecture moins contraignante que celle du système bielle manivelle classique, peut être mis en œuvre suivant différents modes de réalisation, caractérisés chacun par des deux paramètres suivants : le rapport de diamètres primitifs des planétaires 101 et 301 ; et la disposition des axes des satellites 102 et 302 autour de l'axe Z, le choix optimal desdits paramètres améliore avantageusement les performances du moteur 1 selon l'invention en terme de rendement et de puissance en comparaison avec ceux d'un moteur à bielle manivelle à caractéristiques équivalentes : course et alésage identiques.

## MOTEUR 1 SUIVANT UN PREMIER MODE DE REALISATION

Suivant un premier mode de réalisation de l'invention, caractérisé en ce que les diamètres primitifs des planétaires 101 et 301 sont égaux et en ce que les porte-satellites 103 et 303 sont configurés de manière à ce que les axes des satellites 102 et 302 soient symétriques par rapport à l'axe Z du moteur 1.

De préférence, le premier et le second appuis de chacune de la tige 203 sont coaxiaux, de manière à se retrouver avec un seul PMH du piston 202 à la fin de compression et à la fin d'échappement.

De préférence, les intervalles angulaires des profils d'admission et d'échappement de la came radiale 305 sont identiques et sont au plus égaux à 90°.

De préférence, l'intervalle angulaire de la rainure d'accrochage de la bielle 304 est au plus égale à 90°.

### Principe de fonctionnement du moteur 1 selon le premier aspect et suivant le premier mode de réalisation :

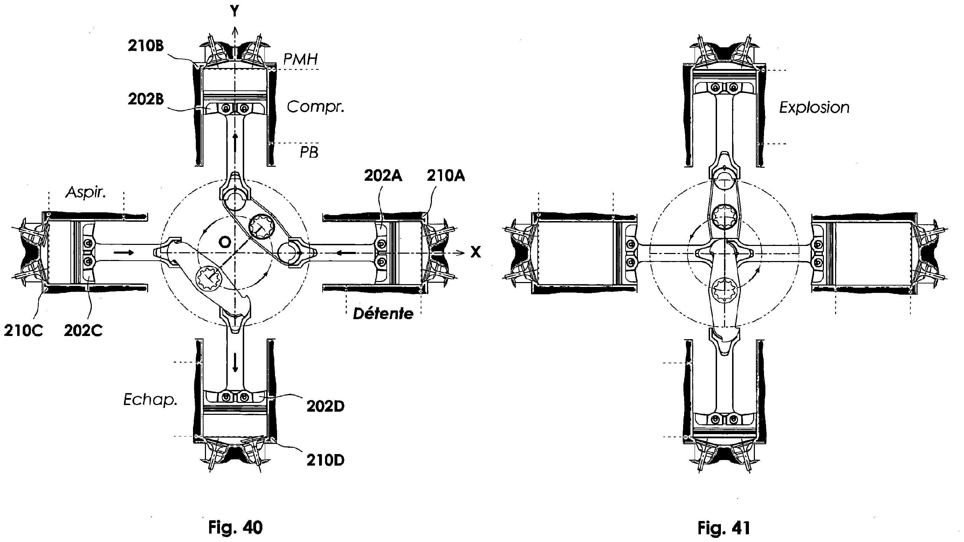

les quatre temps du cycle se produisent dans les cylindres 210, d'une manière spontanée, tel que illustrés par les figures 40 à 45 comme suit :

Figure 40 : le cylindre 210A est le siège du temps moteur : la détente.

Les gaz chauds en expansion repoussent le piston 202A du PMH vers le point PB qui à son tour repousse moyennant sa tige, le maneton I de la bielle 104, l'unité active 100 est entrainée ainsi en rotation dans le sens antihoraire et assure en conséquence les trois autres temps du cycle de la manière suivante :

- Le maneton J repousse le piston 202B du point PB vers le PMH, comprimant l'air admis dans le cylindre 210B (les soupapes d'admission et d'échappement étant fermées)

- L'unité passive 300 étant entrainée en rotation par l'unité active 100, permettant moyennant la bielle 304 : d'une part, de tirer le piston 202C du PMH vers le point PB, grâce au mécanisme d'accrochage (liaison étant établie), afin d'assurer l'aspiration de l'air via la soupape d'admission et d'autre part, de repousser moyennant le maneton J', le piston 202D du point PB vers le PMH, afin chasser les gaz brûlés à travers la soupape d'échappement Figure 41 : Le piston 202B atteint son point culminant au PMH auquel la compression est maximale, le carburant est injecté pour donner lieu à la combustion.

L'admission dans le cylindre 210C est achevée, la bielle 304 relâche la tige du piston 202C (liaison libérée) au point O et bascule vers la tige du piston 202A (en fin de détente) pour entamer l'échappement des gaz brulés, la soupape d'échappement s'ouvre.

L'échappement dans le cylindre 210D est achevé, la bielle 304 s'accroche à la tige du piston 202D afin de pouvoir assurer l'aspiration par la suite.

Le maneton I de la bielle 104 quitte la tige du piston 202A et bascule vers la tige du piston 202C au point O pour entamer la compression des gaz dans le cylindre 210C, la soupape d'admission se referme.

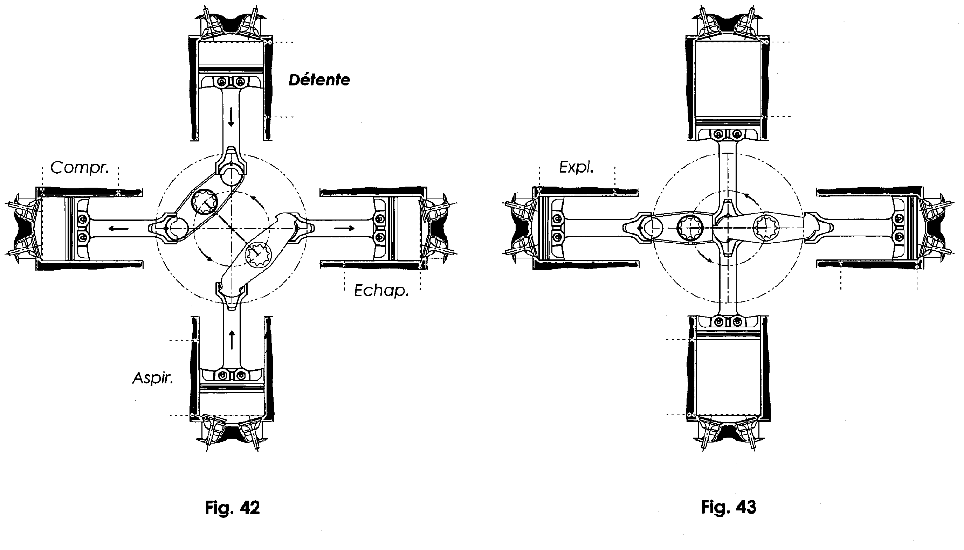

Figure 42 : Même descriptif que la figure 40, avec :

- Détente dans le cylindre 210B

- Compression dans le cylindre 210C

- Admission dans le cylindre 210D

- Echappement dans le cylindre 210A

Pour les figures 43 à 45 qui suivent, les quatre temps se produisent dans les quatre cylindres 210 de la même façon que les figues 40 et 41 décrit ci-dessus.

On constate d'après le principe de fonctionnement ci-dessus ce qui suit :

- Lorsque le satellite 102 effectue un tour autour de l'axe Z, les quatre temps du cycle se produisent dans chacun des quatre cylindres : 210A à 210D.

- On se retrouve dans le même point de départ après un tour du satellite 102, on obtient ainsi, un cycle qui se reproduit d'une manière autonome.

- Le temps moteur (la détente) a lieu dans les quatre cylindres 210 suivant l'ordre A-B-C-D dans le sens de rotation du moteur.

- le premier et le second point de basculement PPB et SPB coïncident avec le point O.

- la course de chacun des pistons est égale à la course de référence.

- Les volumes de compression et de détente sont identiques et sont égales au volume de référence, noté $V_{Réf}$, correspondant à la course de référence.

**Comportement statique** :

L'analyse du comportement statique du moteur 1 selon l'invention, en particulier, celle de la relation liant l'effort appliqué au piston 202 et le couple disponible sur l'arbre de sortie 105 en fonction de son angle de rotation, permet de mettre en évidence les avantages que présente le moteur 1 en terme de performances, grâce à son système de transformation de mouvements qui offre une large flexibilité mécanique en comparaison avec celui à bielle manivelle classique, utilisé dans la majorité des moteurs à combustion interne à l'heure actuelle.
La relation simplifiée donnant le couple, noté $C_s$, disponible à l'arbre de sortie en fonction de la résultante, notée $F_p$, des efforts appliqués sur piston par le système gazeux pendant le temps moteur, s'obtient à partir de l'égalité des puissances consommée et fournie $F_p.V = C_s.\omega$, en considérant que le rendement est égal à 1, que l'arbre de sortie tourne à une vitesse $\omega$ constante et que les inerties des pièces sont négligeables, où $V$ est la vitesse de déplacement du piston dans le cylindre.

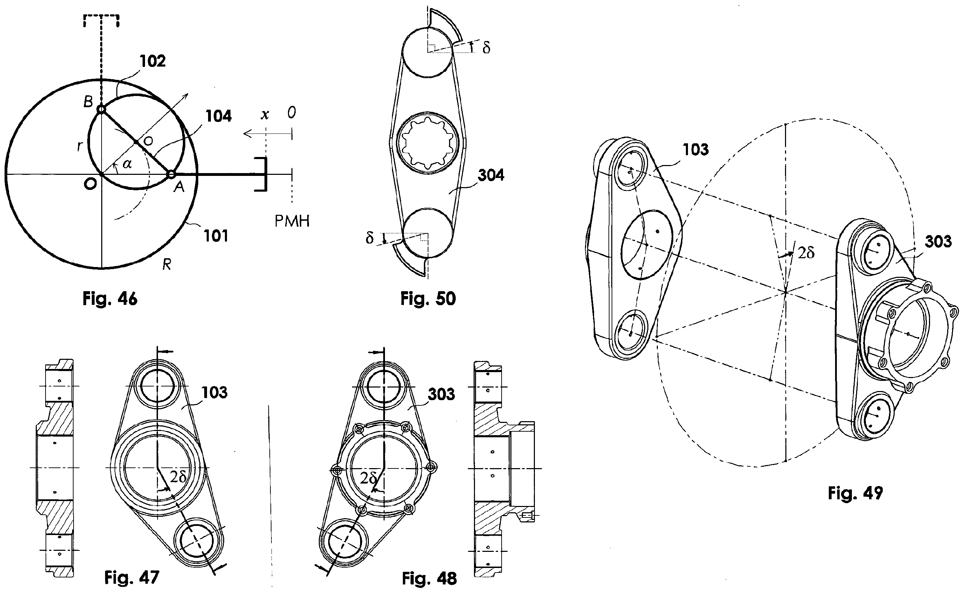

La Figure 46 illustre une représentation graphique du système de transformation des mouvements du moteur 1 selon l'invention, on considère qu'il s'agit d'un mécanisme plan. La première denture du satellite 102 de rayon primitif $r$, roule sans glissement à l'intérieur du planétaire couronne 101 de rayon primitif $R = 2r$. La géométrie suivant la figure illustrative 46 est décrite par :

- Les points A et B désignent respectivement les projections des axes des manetons I et J de la bielle 104 sur le plan principal P,

- Le segment [AB] représente la bielle 104

- Le point o désigne la projection de l'axe du satellite 102 sur le plan principal P, celui-ci effectue un mouvement circulaire de rayon r autour du point O

- $\alpha$ : désigne la position angulaire du point o par rapport à l'axe principal X

- x : désigne la position du piston le long de l'axe principal X par rapport à son PMH

On se focalise uniquement sur les deux temps du cycle : la compression et la détente, ce qui correspond à un demi-tour de l'axe du satellite 102 autour de l'axe Z. Les valeurs de a sont ainsi comprises dans l'intervalle [-$\pi$/2 ; $\pi$/2]. Durant ces deux temps, la tige 203 étant en contact permanent avec le maneton I, est assimilée en liaison pivot avec la bielle 104. La position du piston en fonction de l'angle $\alpha$ s'écrit donc :

$$x = 2r\left(1 - \cos\alpha\right)$$

Par ailleurs, on peut remarquer que pour une rotation de l'axe du satellite 102 d'un angle $\alpha$ donné, le déplacement angulaire de l'arbre de sortie 105, désigné par l'angle $\theta$, peut prendre plusieurs valeurs, et ce, en fonction du rapport de transmission de l'engrenage composé de la second denture du satellite 102 et le pignon solaire 106. En effet, lorsque l'axe du satellite 102 effectue une rotation d'un angle $\alpha$, l'arbre de sortie tourne dans le même sens d'un angle $\theta$ qui s'écrit comme suit :

$$\theta = \alpha\left(1 + 2\frac{N_1}{N_2}\right)$$

Avec $N_1$ et $N_2$ sont respectivement les nombres de dents de la second denture du satellite 102 et du pignon solaire 106.

La valeur dudit rapport de transmission n'a pas d'impact sur les performances du moteur 1, son choix est néanmoins, déterminée uniquement dans le l'objectif d'avoir une même rotation à l'arbre de sortie que celle obtenue au vilebrequin d'un moteur à bielle manivelle lorsque le piston parcours une course, soit un demi-tour.

De préférence, le diamètre primitif du pignon solaire 106 est égale à deux fois le diamètre primitif de la seconde denture du satellite 102 de manière à ce que lorsque le piston 202 effectue un temps du cycle, qui correspond à une rotation d'un quart de tour de l'axe du satellite 102, l'arbre de sortie 105 effectue un demi-tour. Il en résulte que : $\theta = 2\alpha$ où $N_2 = 2 N_1$.

le déplacement x du piston en fonction de l'angle de rotation $\theta$ de l'arbre de sortie pour des valeurs comprises dans l'intervalle $[-\pi, \pi]$ s'écrit ainsi comme suit :

$$x = 2r \left(1 - \cos\frac{\theta}{2}\right)$$

La vitesse du déplacement du piston $V = \dot{x}$ en fonction de l'angle de rotation $\theta(t) = \omega t$, dans le cas d'une rotation à vitesse constante, s'obtient donc :

$$\dot{x} = r\,\omega \sin\frac{\theta}{2}$$

En remplaçant l'expression de la vitesse $V$ dans l'égalité des puissances consommée et fournie précitée, on obtient :

$$C_s = F_p\,r\,\sin\frac{\theta}{2}$$

On remarque d'après la relation ci-dessus que : pareillement à un moteur à bielle manivelle classique, le couple $C_s$ disponible à l'arbre de sortie du moteur 1 selon l'invention s'annule lorsque le piston est au point mort haut PMH (en fin de compression) qui correspond à la valeur de $\theta = 0$, l'action de l'effort $F_p$ est sans effet sur la rotation de l'arbre de sortie puisque le bras de levier est nul. En pratique, ce problème est résolu en prévoyant un volant d'inertie pour assurer le franchissement du PMH en fin de compression.

Néanmoins, contrairement au moteur à bielle manivelle classique, au point PB qui correspond à la valeur de $\theta = \pi$, le couple $C_s$ disponible à l'arbre de sortie du moteur 1 selon l'invention est non seulement non nul, mais aussi le bras de levier de l'effort $F_p$ atteint sa valeur maximale : $C_s = F_p r$.

dans le cas du moteur 1 suivant le premier mode de réalisation, le volume de compression est identique au volume de détente, ceci dit que l'énergie emmagasinée dans le système gazeux en fin de détente, n'est pas entièrement épuisée, en effet, les gaz brulés en expansion gardent toujours une quantité d'énergie résiduelle à fournir au piston du fait que la pression dans le cylindre en fin de détente reste supérieure à la pression atmosphérique. Cette énergie résiduelle se transforme en suite en énergie cinétique des gaz à l'ouverture des soupapes d'échappement. En pratique, on récupère une partie de ladite énergie cinétique grâce à un turbocompresseur qui la restitue en suralimentant le moteur afin d'améliorer sa puissance.

Avantageusement, le volume de détente est prolongé par rapport à celui d'admission en vue de profiter d'avantage du travail fourni par le système gazeux en expansion. Ce qui revient à abaisser autant que possible la pression en fin de détente.

Dans le cas du moteur 1 selon l'invention, du fait que le bras de levier de l'effort $F_p$ atteint sa valeur maximal en fin de détente, on peut directement récupérer cette quantité d'énergie résiduelle sous forme d'un travail mécanique, sans avoir recours à un turbocompresseur, et ceci bien évidemment avec un rendement nettement meilleur.

**MOTEUR 1 SUIVANT UN DEUXIEME MODE DE REALISATION :**

D'après le principe de fonctionnement du moteur 1 suivant le premier mode de réalisation décrit précédemment, on peut remarquer que c'est la bielle 304 qui met fin au temps moteur moyennant l'un de ses manetons, et ce en se basculant vers le piston en détente au point O pour donner lieu à l'échappement : voir figures 40 à 42. Ainsi, pour offrir au piston une détente prolongée et maintenir encore son interaction avec la bielle 104 afin de profiter au maximum du travail fourni par le système gazeux en expansion, il suffit de retarder le basculement de la bielle 304 vers le piston en détente au-delà du point O.

Pour se faire, il est proposé suivant un deuxième mode de réalisation de l'invention caractérisé en ce que les diamètres primitifs des planétaires 101 et 301 sont égaux et en ce que les deux porte-satellites 103 et 303 sont configurés de manière à ce que les axes des satellites 102, 302 et l'axe Z ne soient pas coplanaires.

De préférence, le premier et le second appuis de chacune de la tige 203 sont coaxiaux, de manière à se retrouver avec un seul PMH du piston 202 à la fin de compression et à la fin d'échappement.

Ladite disposition des axes des deux satellites autour de l'axe Z est obtenue par des porte-satellites 103 et 303 asymétriques, caractérisés chacun par un décalage angulaire noté $2\delta$ tel que illustré par les figures : 47 à 49, lequel est réalisé, en tenant compte le sens de rotation du moteur, de manière à ce que la course de détente soit prolongée, autrement dit, le piston 202 en détente continu à repousser, moyennant sa tige 203, le maneton de la bielle 104 au-delà du point O.

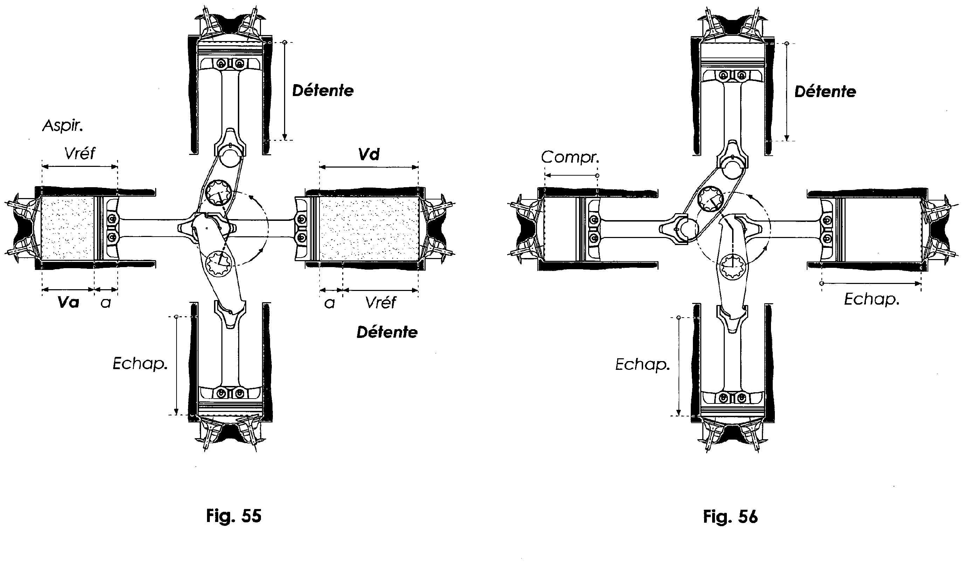

Néanmoins, le prolongement du volume de détente est obtenu au détriment de son volume d'admission. En effet, la bielle 304 relâche précocement la tige d'un piston 202 en phase d'admission au point de basculement PPB avant d'atteindre le point O, pour entrer en contact avec la tige du piston opposé, lequel ayant achevé une détente prolongé au-delà du point O, afin d'entamer l'échappement des gaz brulés. Il en résulte que le volume gagné en détente, noté $a$, par rapport au volume de référence $V_{Réf}$ est retranché en contre partie du volume de d'admission (voir figure 55 : piston 202D) de sorte que leur somme reste inchangée quel que soit le taux de prolongement, on écrit :

$$V_a + V_d = 2\,V_{Réf} \qquad et \qquad V_d = V_{Réf} + a$$

Où $V_a$ et $V_d$ sont respectivement les volumes d'admission et de détente

Etant donné que le volume de détente augmente et le volume d'admission diminue, la came radiale 305 du moteur 1 suivant le deuxième mode de réalisation, est dotée d'un profil d'échappement prolongé d'un angle $\delta$ et d'un profil d'admission rétréci du même angle $\delta$ par rapport à ceux où les volumes d'admission et de détente sont identiques, tel que illustré par la figure 49.

Du même principe, l'intervalle angulaire de la rainure d'accrochage de la bielle 304 est rétréci d'un angle $\delta$ : tel que illustré par la figure 50.

**Principe de fonctionnement du moteur 1 selon le premier aspect et suivant le deuxième mode de réalisation** :

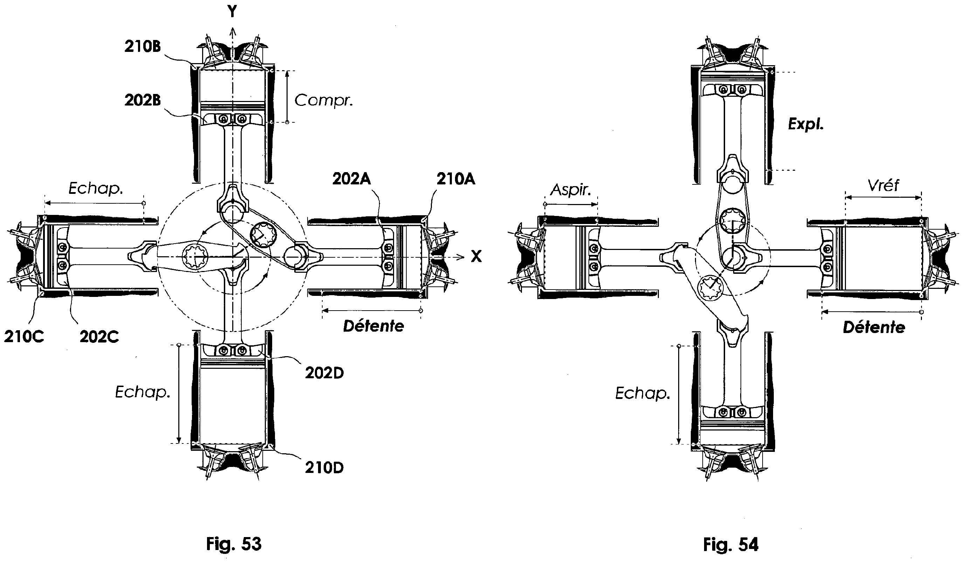

les quatre temps du cycle se produisent dans les cylindres 210, d'une manière spontanée, tel que illustrés par les figures 53 à 60 comme suit :

Figure 53 : le cylindre 210A est le siège du temps moteur : la détente.

Le piston 202A étant en détente, repousse moyennant sa tige, le maneton I de la bielle 104 qui assure à son tour la compression dans le cylindre 210B grâce à son deuxième maneton J.

La bielle 304 atteint sa position horizontale en retard vu le décalage angulaire des portes satellites. Elle achève ainsi tardivement l'échappement des gaz brulés dans le cylindre 210C, s'accroche à la tige du piston 202C au PMH pour entamer l'aspiration de l'air via la soupape d'admission, tandis que son premier maneton I' dégage déjà le volume supplémentaire des gaz brulés dans le cylindre 210D résultant de la détente prolongé du piston 202D au-delà du point O.

Figure 54 :

Le piston 202B atteint son point culminant au PMH, auquel la compression dans le cylindre correspondant est maximale, le carburant est injecté pour donner lieu à la combustion : les soupapes d'admission et d'échappement étant fermées.

Le piston 202A étant en détente prolongée, continue à repousser, moyennant sa tige, le maneton I de la bielle 104 au-delà du point O.

la bielle 304 tire le piston 202C grâce au mécanisme d'accrochage (liaison étant établie), créant ainsi la dépression nécessaire pour l'aspiration de l'air via la soupape d'admission et continue, moyennant le maneton J', à dégager les gaz brulés dans le cylindre 210D à travers la soupape d'échappement.

Figure 55 :

Le piston 202A atteint son point bas PB auquel le maneton J est au second point de basculement SPB, ayant balayé un volume de détente prolongé : $V_d = V_{réf} + a$, la pression dans le cylindre 210A est proche de la pression atmosphérique, il en résulte une restitution maximale de l'énergie fournie par le système gazeux en combustion.

Le piston 202B est en détente, repousse a son tour le maneton J de la bielle 104.

la bielle 304 relâche précocement la tige du piston 202C avant d'atteindre le point O, et ce grâce au rétrécissement de l'intervalle angulaire de sa rainure d'accrochage (Figure 50), et bascule vers le piston 202A pour entamer l'échappement des gaz brulés via la soupape d'échappement.

Le volume aspiré par le piston 202C est diminué par rapport au volume de référence : $V_a = V_{réf} - a$.

Figure 56 : Même descriptif que la figure 53, quitte à tourner la figure 56 de 90° dans le sens horaire.

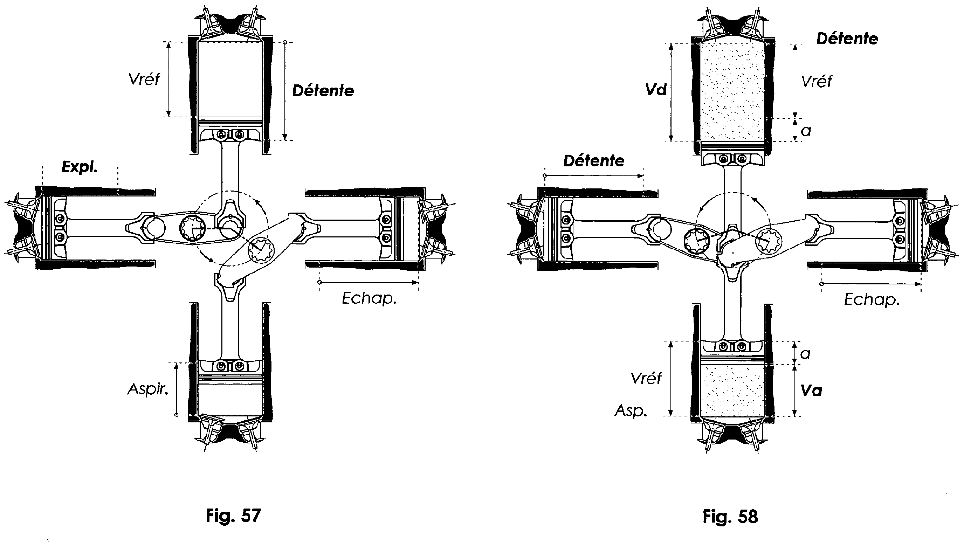

Pour les figures 57 à 60 qui suivent, les quatre temps se produisent dans les cylindres 210 de la même façon que les figues 53, 54 et 55 décrit ci-dessus.

On constate d'après le principe de fonctionnement ci-dessus ce qui suit :

- Lorsque le satellite 102 effectue un tour autour de l'axe Z qui correspond à deux tours de l'arbre de sortie 105, les quatre temps du cycle moteur se produisent dans chacun des quatre cylindres 210.

- On se retrouve dans le même point de départ après un tour du satellite 102, on obtient ainsi, un cycle qui se reproduit d'une manière autonome.

- Le premier et le second point de basculement PPB et SPB de chacun des pistons 202, sont symétriques par rapport au point O.

- Le premier point de basculement PPB d'un piston 202 donné est identique au second point de basculement SPB du piston opposé et vice versa.

- la somme des volumes de compression et de détente de chacun des pistons reste inchangée quel que soit la valeur de prolongement : $V_a + V_d = 2 V_{Réf}$, on dit que lesdits volumes sont dépendants.

- Il y a quatre points de basculement PPB/SPB au lieu d'un seul point commun à tous les pistons, ces points sont répartis sur les axes principaux X et Y à une distance : $\varepsilon = \dfrac{a}{S}$ du point O, où : S est l'air de la section du piston 202.

- Lorsqu'un piston 202 donné parcours une course prolongée, le porte-satellite 303 effectue une rotation de : 90° + $\delta$, ce qui explique le prolongement angulaire $\delta$ du profil d'échappement de la came radiale 305 du moteur 1 selon le deuxième mode de réalisation : voir figure 49.

- De même, lorsqu'un piston 202 donné achève une admission, le porte-satellite 303 effectue une rotation de : 90° - $\delta$, ce qui explique le rétrécissement angulaire $\delta$ : d'une part, du profil d'aspiration de la came radiale 305 et d'autre part, de l'intervalle angulaire de la rainure d'accrochage aux extrémités de la bielle passive 304 du moteur 1 selon le deuxième mode de réalisation : voir figure 50.

- L'explosion dans un cylindre 210 donné se produit avant l'achèvement de la détente dans le cylindre prédécesseur, on a interférence des temps moteur de deux pistons 202.

- Dès l'explosion d'un piston 202 donné et jusqu'à l'achèvement de la détente prolongée du piston prédécesseur, on se retrouve avec deux pistons à la fois en détente, actionnant concomitamment les deux manetons I et J de la bielle 104, par exemple : durant l'intervalle horaire entre les figures 54 et 55, le piston 202B et son prédécesseur 202A actionnent simultanément la bielle 104. Il en résulte que le couple disponible à l'arbre de sortie pendant la période d'interférence est la somme des couples générées par chacun des deux pistons en détente.

- A la fin de compression au PMH, où l'action d'un piston 202 donné est sans effet sur la rotation de l'arbre de sortie, le piston prédécesseur, en pleine détente, actionne toujours la bielle 104 et génère par conséquent un couple non nul, du fait que la pression qui règne dans le cylindre correspondant est toujours supérieure à la pression atmosphérique, Il en résulte que le couple $C_s$ disponible à l'arbre de sortie 105 ne s'annule jamais.

- Le franchissement du PMH en fin de compression d'un piston 202 donné est assuré par l'action du piston prédécesseur (voir Figure 54 piston 202B) Ainsi, le rôle du volant d'inertie se limitera uniquement sur l'absorption d'irrégularité du couple moteur entraîné par les à-coups des pistons. On peut se contenter alors d'un volant moteur à faible moment d'inertie.

Certes, le moteur 1 suivant le deuxième mode de réalisation permet d'offrir un meilleur rendement et donc une meilleure consommation et des rejets CO2 et de polluants NOx réduits, en comparaison avec celui du moteur à bielle manivelle classique. Néanmoins, cette amélioration de rendement est obtenue au prix d'une puissance réduite, car il admet moins d'air et donc moins de combustible. Afin d'évaluer cette réduction de puissance, il est judicieux de calculer le volume d'admission réduit $V_a$ en fonction du volume de référence $V_{Réf}$ pour un taux de prolongement $k > 1$ arbitraire.

Etant donné que :

$$V_a + V_d = 2\,V_{Réf} \qquad \text{et} \qquad V_d = k\,V_a$$

Le volume de compression réduit $V_a$ en fonction du volume de référence s'écrivent donc sous la forme :

$$V_a = \frac{2}{1+k}\,V_{Réf}$$

En pratique, le cycle thermodynamique prolongé peut aussi faire référence à un moteur bielle manivelle classique, dans lequel la soupape d'admission est maintenue ouverte au-delà du point mort bas pour permettre l'éjection d'une partie de l'air précédemment admis. La course de compression est ainsi raccourcie, mais cette fois-ci, la course de détente reste inchangée $V_d^{BM} = V_{Réf}$, contrairement au moteur 1 suivant le deuxième mode de réalisation, à caractéristiques équivalentes, qui offre un volume de détente plus important : $V_d = \frac{2k}{1+k}\,V_{Réf}$.

Il l'en résulte que pour atteindre un taux de prolongement volumétrique, avec retard de fermeture de soupape d'admission, équivalent à celui du moteur 1 selon le deuxième mode de réalisation, il faut chasser un volume considérable avant de fermer la soupape d'admission.

Avec un taux de prolongement de détente arbitraire : $k > 1$, le volume comprimé par un moteur classique avec retard de fermeture de soupape d'admission vaut :

$$V_a^{BM} = \frac{V_{Réf}}{k}$$

Qui est inférieur à celui du moteur 1 selon le deuxième mode de réalisation. Il vient à écrire :

$$V_a = \frac{2k}{k+1}\,V_a^{BM}$$

où :

$V_a^{BM}$ : désigne le volume de compression d'un moteur à bielle manivelle avec retard de fermeture de soupape.
$V_a$ : désigne celui du moteur 1 selon le deuxième mode de réalisation à caractéristiques équivalentes.

Par exemple, avec un taux de prolongement volumétrique : $k = 1.5$, on trouve : $V_a = 1.2\,V_a^{BM}$. Soit 20% de volume comprimé de plus par rapport à un moteur classique à bielle manivelle avec retard de fermeture de soupape.

Autrement dit, à rendement égal, le moteur 1 suivant le deuxième mode de réalisation reste largement plus avantageux en termes de puissance spécifique en comparaison avec un moteur à caractéristiques équivalentes, avec retard de fermeture de soupape d'admission.

Le moteur 1 suivant le deuxième mode de réalisation est certainement plus avantageux en termes de rendement par rapport celui suivant le premier mode de réalisation, néanmoins, la réduction du volume de compression qui accompagne le prolongement de celui de détente influence défavorablement la puissance spécifique du moteur. La meilleure manière de réaliser la présente invention, sera donc celle suivant un mode de réalisation, dans lequel le moteur 1 est capable d'atteindre autant de rendement que celui selon le deuxième mode de réalisation et développant une puissance nettement meilleure. Ce qui revient à offrir au piston 202 une détente prolongé, afin de diminuer autant que possible la pression en fin de détente, tout en comprimant un volume équivalent à celui de référence : $V_{Réf}$.

## VI. MEILLEUR MANIERE DE REALISER L'INVENTION

D'après le principe de fonctionnement du moteur 1 suivant les deux modes de réalisation décrits précédemment, on peut remarquer que la dépendance entre les volumes de compression et de détente réside dans le fait que le basculement de la bielle 304 entre un piston 202 en admission et son opposé en détente se produit dans le même point et d'une manière instantanée. Ainsi, pour pouvoir obtenir une indépendance entre lesdits volumes, il suffit de proroger l'intervalle temporel de basculement, ce qui revient à relâcher le piston en aspiration bien avant de mettre fin à la détente du piston opposé, afin de lui laisser le temps d'avoir une course prolongée.

Pour se faire, il est proposé suivant un meilleur mode de réalisation de l'invention caractérisée en ce que le diamètre primitif du planétaire 301 est supérieur à celui du planétaire 101, et en ce que les deux porte-satellites 103 et 303 sont configurés de manière à ce que les axes des satellites 102, 302 et l'axe (Z) ne soient pas coplanaires.

Le moteur 1 suivant le meilleur mode de réalisation de l'invention est mis en œuvre en configurant les organes ci-après de la manière suivante :

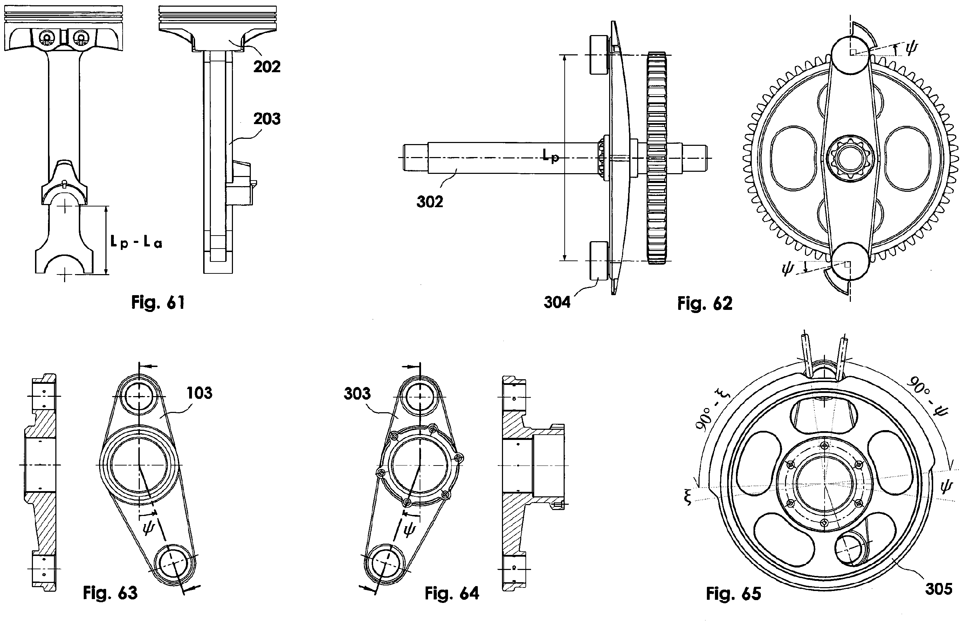

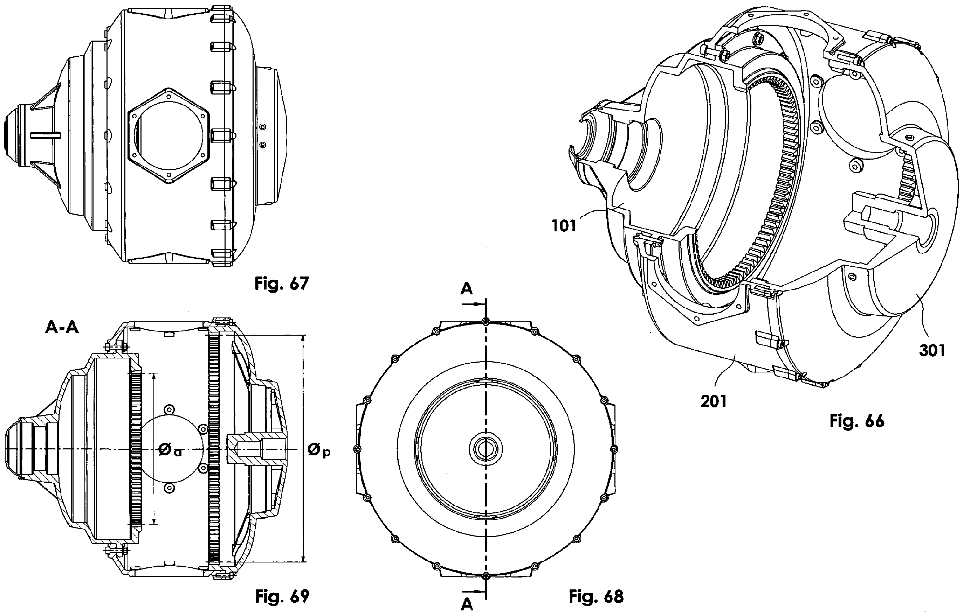

- Le diamètre primitif du planétaire 101, définissant principalement le comportement cinématique du moteur 1, reste inchangé, l'espacement entre les axes des manetons I et J de la bielle 104, notée $L_a$, est ainsi égale à la course de référence
- Le diamètre primitif du planétaire 301 étant supérieur à celui du planétaire 101 (voir figures 66 à 69), la distance entre les axes des manetons I' et J' de la bielle 304, notée $L_p$, est par conséquent supérieure à celle séparant les axes des manetons I et J de la bielle 104, on a : $L_p > L_a$
- De préférence, les axes du premier et du second appui de la tige 203 sont séparés d'une distance égale à la différence des rayons primitifs des planétaire 301 et 101 soit : $(L_p - L_a)$, de manière à se retrouver avec un seul PMH du piston 202 à la fin de compression et à la fin d'échappement : voir figure 61
- Ladite disposition des axes des deux satellites autour de l'axe Z est obtenue par des porte-satellites 103 et 303 asymétriques, caractérisés chacun par un décalage angulaire, noté $\psi$, tel que illustré par : les figures 63 et 64, lequel est réalisé, en tenant compte le sens de rotation du moteur, de manière à ce que la course de détente soit prolongée
- Une came radiale 305 tel qu'elle est illustrée par : la figure 65, dont les profils sont configurés de manière à assurer l'ouverture des soupapes en synchronisation avec les quatre temps du cycle moteur
- L'intervalle angulaire de la rainure d'accrochage dans les deux extrémités de la bielle 304 est rétréci d'un angle : $\psi$, tel que illustré par la figure 62

**Principe de fonctionnement du moteur 1 selon le premier aspect et suivant le meilleur mode de réalisation** :

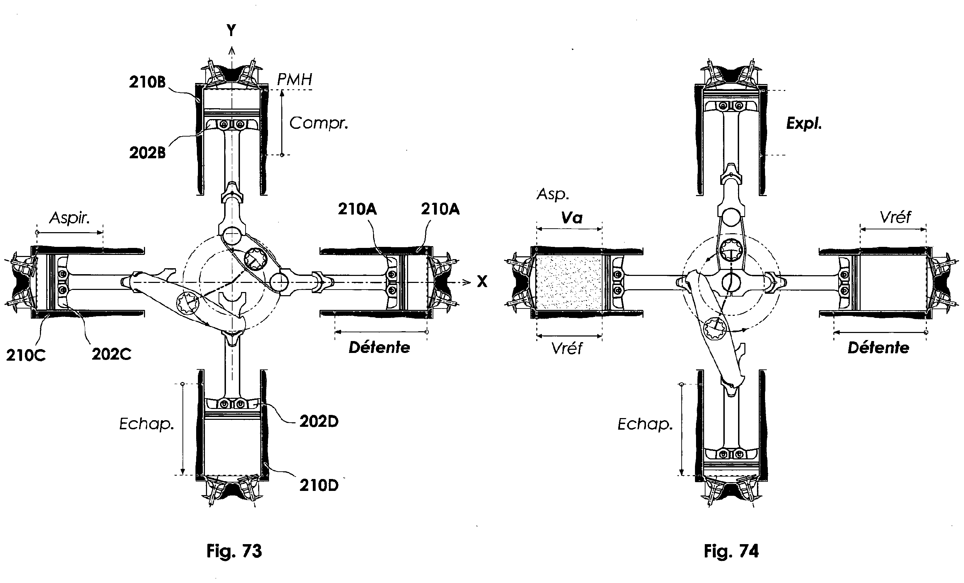

les quatre temps du cycle se produisent dans les cylindres 210, d'une manière spontanée, tel que illustrés par les figures 73 à 80 comme suit :

Figure 73 : le cylindre 210A est le siège du temps moteur : la détente.

Le piston 202A étant en détente, repousse moyennant le premier appuis de sa tige, le maneton I de la bielle 104 qui assure à son tour la compression dans le cylindre 210B grâce à son deuxième maneton J.

la bielle 304 tire la tige du piston 202C, grâce au mécanisme d'accrochage (liaison étant établie), créant ainsi la dépression nécessaire pour aspirer l'air via la soupape d'admission, tandis que le maneton J' repousse le deuxième appuis de la tige du piston 202D afin chasser les gaz brulés à travers la soupape d'échappement.

Figure 74 :

Le piston 202A étant en détente prolongée, continue à repousser le maneton I de la bielle 104 au-delà du point O.

Le piston 202B atteint son point culminant au PMH, auquel la compression dans le cylindre correspondant est maximale, le carburant est injecté pour donner lieu à la combustion : les soupapes d'admission et d'échappement étant fermées.

La bielle 304 relâche la tige du piston 202C au moment auquel le maneton I de la bielle 104 entre en contact avec le premier appuis de ladite tige piston 202C au point O, l'admission dans le cylindre 210C est ainsi achevée, le volume aspiré est égale au volume de référence : $V_a = V_{réf}$

Le maneton J' continue à repousser le piston 202D, assurant l'échappement dans le cylindre 210D correspondant.

Figure 75 :

La bielle 104 est entrainée concomitamment par le piston 202B désormais en détente et le piston 202A qui continue à repousser le maneton I au-delà du point O. Ce dernier assure à son tour la compression les gaz dans le cylindre opposé 210C.

Parallèlement, la bielle 304 atteint tardivement sa position verticale vue le décalage angulaire des porte-satellites 103 et 303, elle achève ainsi l'échappement des gaz brulés dans le cylindre 210D.

A partir du moment auquel la bielle 304 relâche la tige du piston 202C (voir figure 74), le maneton I' se déplace librement le long de l'axe principal X, avant d'entrer en contact avec la tige du piston opposé 202A, laissant ainsi le temps à ce dernier pour effectuer une détente prolongée au-delà du point O.

Figure 76 :

Le piston 202B, toujours en détente, continue à actionner la bielle 104 qui assure à son tour la compression des gaz dans le cylindre successeur 210C.

Le maneton J' entre en contact avec la tige du piston 202A, mettant fin à sa détente prolongée au-delà du point O. le volume de détente correspondant étant supérieur au volume de référence : $V_d = V_{réf} + a$.

la bielle 304 étant accroché à la tige du piston 202D, assure l'aspiration des gaz dans le cylindre 210D correspondant.

Figure 77 :

Même descriptif que la figure 73, quitte à tourner la figure 77 de 90° dans le sens horaire.

Pour les figures 78 à 80 qui suivent, les quatre temps se produisent dans les cylindres de la même façon que les figues 73, 74, 75 et 76 décrit ci-dessus.

On constate d'après le principe de fonctionnement ci-dessus ce qui suit :

- Lorsque le satellite 102 effectue un tour autour de l'axe Z qui correspond à deux tours de l'arbre de sortie 105, les quatre temps du cycle moteur se produisent dans chacun des quatre cylindres.

- On se retrouve dans le même point de départ après un tour du satellite 102, on obtient ainsi, un cycle qui se reproduit d'une manière autonome.

- Etant donné que l'unité active 100 qui récupère le travail mécanique fourni par les pistons 202 pendant le temps moteur et assure la compression des gaz dans les cylindres 210, il en résulte qu'en maintenant le diamètre primitif du planétaire 101 inchangé, le moteur 1 selon l'invention se comporte cinématiquement de la même manière selon ses trois modes de réalisation décrits précédemment durant la compression et la détente, ceci dit qu'on se retrouve avec les mêmes conditions d'inflammation du carburant dans les cylindres 210.

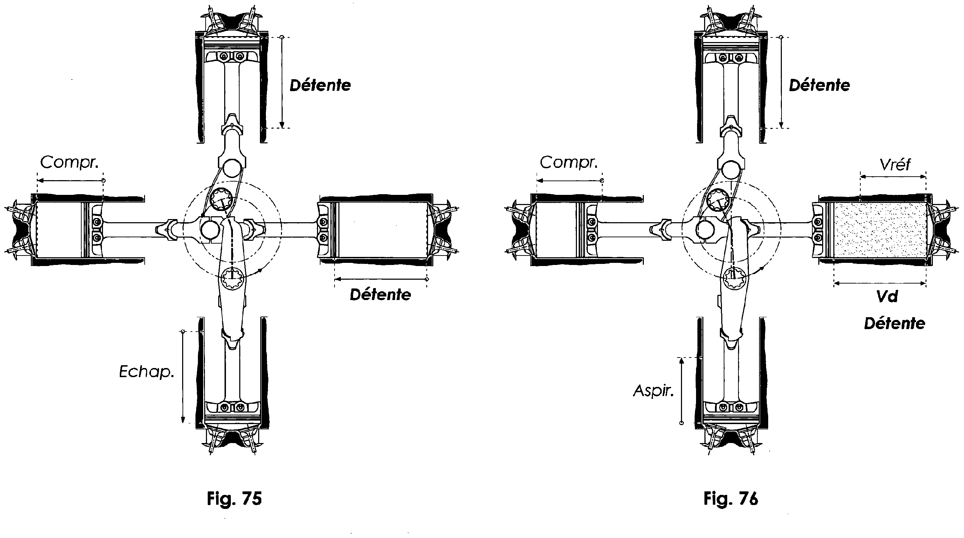

- le moteur 1 selon le troisième mode de réalisation permet d'obtenir une détente prolongée, $V_d = V_{réf} + a$ (voir figure 76 : piston 202A), tout en gardant le volume d'admission identique au volume de référence : $V_a = V_{réf}$ (voir figure 74 : piston 202C) On dit que les volumes de détente et d'admission sont indépendants.

- La bielle 304 relâche un piston 202 en admission bien avant de mettre fin à la détente du piston 202 opposé, ce qui permet de laisser à ce dernier le temps d'avoir une détente prolongée (voir figures 74 à 76) sans avoir recours à une réduction du volume d'admission. Contrairement au moteur 1 selon le deuxième mode de réalisation, où le basculement de la bielle 304 entre le piston en aspiration et son opposé en détente se produit dans le même point et d'une manière instantanée.

- En se référant aux équations horaires du mouvement du piston décrites précédemment et étant donné que le diamètre primitif du satellite 302 est supérieur à celui du satellite 102, la vitesse de déplacement d'un piston 202 pendant l'admission et l'échappement est supérieure à celle pendant la compression et la détente. Ainsi, la compression d'un volume $V_a$ par la bielle 104 nécessite une rotation de 90° des porte-satellites (voir figures 74 à 78 : cylindre 210C), tandis que l'aspiration du même volume $V_a$ par lla bielle 304 requiert seulement une rotation de (90° - $\psi$) des porte-satellites (voir figures 75 à 78 : cylindre 210D) ce qui explique le rétrécissement $\psi$ de l'intervalle angulaire de la rainure d'accrochage de la bielle 304.

- De la même manière, Lorsqu'un piston parcours une détente prolongée : $V_d = V_{réf} + a$, les porte-satellites effectuent une rotation de (90° + $\psi$ + $\xi$) (voir figures 74 à 80 cylindre 210B) tandis que l'échappement du même volume $V_d$ nécessite seulement une rotation de (90° - $\xi$) des porte-satellites (voir figures 76 à 79 cylindre 210A). Ce qui justifie le rétrécissement angulaire des profils d'admission et d'échappement dans la came centrale 24 tel que illustré par la figure 65.

- L'explosion dans un cylindre 210 donné se produit avant l'achèvement de la détente dans le cylindre prédécesseur, on a interférence des temps moteur.

- Dès l'explosion d'un piston 202 donné et jusqu'au achèvement de la détente prolongée du piston 202 prédécesseur, on se retrouve avec les deux pistons à la fois en détente, actionnant concomitamment les deux manetons I et J de la bielle 104. Il en résulte que le couple disponible à l'arbre de sortie 105 pendant la période d'interférence est la somme des couples générées par chacun des deux pistons.

- A la fin de compression au PMH, où l'action d'un piston 202 donné est sans effet sur la rotation de l'arbre de sortie105, le piston 202 prédécesseur, en pleine détente, actionne toujours la bielle 104 et génère par conséquent un couple non nul, du fait que la pression qui règne dans le cylindre correspondant est toujours supérieure à la pression atmosphérique, Il en résulte que le couple $C_s$ disponible à l'arbre de sortie 105 ne s'annule jamais.

- Le franchissement du PMH en fin de compression d'un piston 202 donné est assuré par l'action du piston 202 prédécesseur.

Le moteur 1 suivant le meilleur mode de réalisation permettra donc à la fois, d'offrir aux pistons une détente prolongée afin de profiter au maximum du travail fourni par le système gazeux et de comprimer autant de volume que celui d'un moteur à bielle manivelle classique à caractéristiques équivalentes et par conséquent, développer une puissance nettement meilleure.

D'après le principe de fonctionnement ci-dessus, on remarque que les valeurs des volumes d'admission $V_a$ et de détente prolongée $V_d$ dépendent principalement des paramètres suivants : le rapport d'allongement des bielles : $u = L_a / L_p$ et le décalage angulaire des portes satellites : $\psi$. Il serait donc judicieux de déterminer ces paramètres, qui permettent de satisfaire les deux conditions souhaitées suivantes .

- Première condition : Assurer un volume d'admission identique à celui de référence $V_a = V_{Réf}$.
- Seconde condition : Permettre au piston un prolongement optimal afin d'abaisser autant que possible la pression en fin de détente.

Pour se faire, il faut mettre le point sur les contraintes géométriques traduisant ces deux conditions, afin d'en tirer les deux équations requises pour la détermination desdits paramètres. On note :

- $k$ : le taux de prolongement de détente souhaité, tel que : $k = V_d / V_a$
- $\tau$ : Le taux de compression volumétrique défini précédemment
- $\xi$ et $\chi$ : Angles que font les bielles 104 et 304 avec un axe principal tel que illustré par la figure 81.
- $v$ : le volume mort en fin de compression, on a : $v = V_a/\tau$
- $S$ : l'air de la section du piston.

La figure 78, mettant en évidence le début de la compression dans le cylindre 210D, est représentée graphiquement sur la figure 81, afin de faire ressortir l'équation caractérisant la première condition qui se traduit comme suit : les points de basculement PPB de chacun des quatre pistons coïncident avec le point O :

$$sin\,\psi = \frac{L_p - L_a}{L_p} = 1 - u$$

De même manière, la figure 80, mettant en évidence la fin de détente prolongée du piston 202B, est représentée graphiquement sur la figure 82, afin de faire ressortir l'équation caractérisant la deuxième condition, qui se traduit comme suit : La bielle passive met fin à la détente du piston lorsque le rapport $V_d / V_a$ atteint le taux de prolongement souhaité : $k$, On a :

$$sin\,\chi = \frac{V_d - V_a}{S.L_a}$$

Etant donné que :

$$V_a = S.L_a + v \qquad\qquad \text{Et} \qquad\qquad V_d - V_a = (k-1)V_a$$

il vient que :

$$sin\,\chi = (k-1)\frac{\tau}{\tau-1}$$

De même on a :

$$L_p sin\,\xi + L_a\,sin\,\chi = L_p - L_a$$

En remplaçant (*sin$\chi$*) par son expression on trouve :

$$sin\,\xi = 1 - u\frac{k\tau-1}{\tau-1}$$

Etant donné que les axes des satellites 102 et 302 tournent à la même vitesse de rotation : $\chi = \psi + \xi$, l'équation caractérisant la deuxième condition s'écrit donc comme suit :

$$Arcsin(1-u) + Arcsin\left(1 - u\,\frac{k\tau-1}{\tau-1}\right) = Arcsin\left(k - 1\,\frac{\tau}{\tau-1}\right)$$

On trouve ainsi les deux équations nécessaires pour la détermination des paramètres **u,** $\psi$ permettant de satisfaire les deux conditions souhaitées. Par exemple, pour un taux de prolongement : $k = 1.40$, un volume de compression identique à celui de référence $V_a = V_{Réf}$ et un taux de compression volumétrique : $\tau = 16$, on trouve les valeurs approximatives suivantes : $L_p = 1{,}55\,L_a$ et $\psi = 20.74°$

Par ailleurs, on remarque d'après le principe de fonctionnement du moteur 1 selon l'invention que le contact de la tige 203, d'une part, avec la bielle 104 au début de la compression et d'autre part avec la bielle 304 au début de l'échappement a lieu à des vitesses non nulles et à direction opposée, ce qui provoque des chocs entre lesdites pièces. Pour remédier à ce problème il suffit de proroger l'intervalle temporel de collision des pièces en question afin d'amortir le choc. Pour se faire, il est proposé selon un mode de réalisation, un dispositif amortisseur comprenant des sabots 2031 et 2033 reliés respectivement aux premier et second appuis de la tige 203 par une liaison glissière et au moins un élément élastique monté entre chacun desdits sabots 2031 et 2033 et la tige 203, permettant de proroger la durée du choc et de diminuer par conséquent son impact sur les pièces mises en jeu.

**Revendications**

1. Un moteur à combustion interne (1) à train épicycloïdale et à pistons alternatifs comportant au moins :

   • Un bloc-cylindres (200) comprenant :

      ✓ Un collier (201) étant configuré pour regrouper un nombre de cylindres (210) au moins égale à un, disposés radialement autour d'un axe (Z) et rigidement reliés au collier (201), les axes desdits cylindres (210) appelés axes principaux du moteur (1) étant perpendiculaires à l'axe (Z) en un point (O), le plan orthogonal à l'axe (Z) et passant par le point (O) est appelé plan principal (P), chacun desdits cylindres (210) comprend en sa partie supérieure :

         ◦ Au moins deux soupapes (211), l'une des deux soupapes (211) étant une soupape d'admission et l'autre des deux soupapes (211) étant une soupape d'échappement, chacune desdites soupapes (211) est guidée en translation suivant son axe dans le cylindre (210) et étant maintenue fermée moyennant un ressort (214) monté entre le cylindre (210) et une coupelle (212) butant contre la tige de la soupape

(211) par l'intermédiaire d'une clavette (213), ledit ressort (214) étant destiné à exercer une force de rappel sur la coupelle (212) de manière à maintenir la soupape (211) fermée ;
∘ Au moins deux culbuteurs (215) reliés cinématiquement au cylindre (210) aptes à coopérer par contact avec les soupapes (211) et étant agencés de manière à déformer le ressort (214) pour assurer l'ouverture des soupapes (211), chaque culbuteur (215) est solidaire à une tige (216) par un système de fixation permettant un réglage de leur position relative,

✔ A l'intérieur de chacun desdits cylindres (210) coulisse un piston (202) guidé en translation coaxiale dans le cylindre (210) correspondant et étant destiné à effectuer des mouvements linéaires alternatifs, la tête du piston (202) et le fond du cylindre (210) correspondant délimitent une chambre de combustion dans laquelle se produisent les quatre temps d'un cycle moteur, le volume de ladite chambre de combustion étant variable entre un minimum, atteint à un moment du cycle correspondant à une position du piston (202) appelée point mort haut PMH et un maximum atteint à un moment du cycle correspondant à une position du piston (202) appelée point bas PB, chaque chambre de combustion étant alimentée par un système d'admission d'un gaz comburant et d'un carburant et étant en communication avec un système d'échappement des gaz brulés ;
✔ Un dispositif monté entre chacun des pistons (202) et le cylindre (210) correspondant permettant d'assurer l'isolation et l'étanchéité de la chambre de combustion ;
✔ Une tige (203) solidaire du piston (202) et agencée pour se déplacer en translation longitudinale le long de l'axe du piston (202) correspondant ;

• Au moins une came radiale (305) guidée en rotation autour de l'axe (Z) agencée pour être entrainée en rotation par au moins un des organes tournants du moteur (1) et étant destinée à actionner chacun des culbuteurs (215) moyennant un dispositif comportant au moins :

✔ un suiveur (306) guidé en translation par rapport à son axe, apte à coopérer par contact avec ladite came (305) et étant destiné à emprunter un chemin de came et,
✔ une tige-culbuteur (307) monté entre le suiveur (306) et la tige (216) et étant agencé de manière à transmettre les mouvements de déplacement du suiveur (306) au culbuteur (215) pour commander l'ouverture de la soupape (211) en synchronisation avec la rotation du moteur (1),

la came radiale (305) étant dotée d'au moins deux profils extérieurs distincts, un premier profil commandant l'ouverture les soupapes d'admission et un second profil commandant l'ouverture des soupapes d'échappement,

**Caractérisé en ce qu'**il comporte :

• Au moins une unité active (100) comprenant un ensemble d'organes agencés de manière à former un train épicycloïdal comportant au moins :

✔ un planétaire couronne (101) monté coaxialement par rapport à l'axe (Z), étant rigidement lié ou issu de matière du collier (201) et étant situé sur un premier côté du plan principal (P) ;
✔ un satellite (102) dont l'axe est parallèle à l'axe (Z) comportant au moins une première denture apte à engrener avec le planétaire couronne (101) et étant maintenu sur son orbite moyennant un porte-satellite (103) guidé en rotation autour de l'axe (Z), le satellite (102) est relié à une première extrémité de son axe avec le porte-satellite (103) par une liaison pivot, le diamètre primitif de la première denture du satellite (102) étant égale au rayon primitif du planétaire couronne (101) ;
✔ l'unité active (100) comprend encore une bielle (104) montée sur l'axe du satellite (102) par un moyen de fixation assurant une liaison rigide et complète et disposant d'un nombre de manetons (I) égale au nombre des axes principaux du moteur (1), les axes desdits manetons (I) sont parallèles à l'axe (Z), passent par le cercle primitif de la première denture du satellite (102) et disposés de manière à ce que quand le porte-satellite (103) tourne autour de l'axe (Z), la projection de l'axe de chacun des manetons (I) sur le plan principal (P) effectue un mouvement rectiligne alternatif le long d'un axe principal du moteur (1) en décrivant un segment, appelé chemin du maneton (I) dont le centre est le point (O) et dont la longueur est égale au diamètre primitif du planétaire couronne (101), l'unité active (100) étant destinée à coopérer par contact par l'intermédiaire des manetons (I) avec les tiges (203) pour effectuer une transformation réversible des mouvements linéaires alternatifs des pistons (202) du bloc-cylindres (200) en mouvement de rotation continu du porte-satellite (103) ;

- Au moins une unité passive (300) comprenant un ensemble d'organes agencés de manière à former un train épicycloïdal comportant au moins :

✓ un planétaire couronne (301) monté coaxialement par rapport à l'axe (Z), étant rigidement lié ou issu de matière du collier (201) et étant situé sur le côté opposé au premier côté du plan principal (P) ;
✓ un satellite (302) dont l'axe est parallèle à l'axe (Z) comportant au moins une denture apte à engrener avec le planétaire couronne (301) et étant maintenu sur son orbite moyennant un porte-satellite (303) guidé en rotation autour de l'axe (Z), le satellite (302) est relié à une première extrémité de son axe avec le porte-satellite (303) par une liaison pivot, le diamètre primitif de la denture du satellite (302) étant égale au rayon primitif du planétaire couronne (301), le porte-satellite (303) est agencé pour être entrainé en rotation par au moins un des organes tournants de l'unité active (100) ;
✓ l'unité passive (300) comprend encore une bielle (304) montée sur l'axe du satellite (302) par un moyen de fixation assurant une liaison rigide et complète et disposant d'un nombre des manetons (I') égale au nombre des axes principaux du moteur (1), les axes desdits manetons (I') sont parallèles à l'axe (Z), passent par le cercle primitif de la denture du satellite (302) et disposés de manière à ce que quand le porte-satellite (303) tourne autour de l'axe (Z), la projection de l'axe de chacun des manetons (I') sur le plan principal (P) effectue un mouvement rectiligne alternatif le long d'un axe principal du moteur (1) en décrivant un segment, appelé chemin du maneton (I'), dont le centre est le point (O) et de longueur égale au diamètre primitif du planétaire couronne (301), l'unité passive (300) étant destinée à coopérer par contact, par l'intermédiaire des manetons (I') avec les tiges (203) pour assurer une transformation de mouvement de rotation continu du porte-satellite (303) en mouvements de translation alternatifs des pistons (202) du bloc-cylindres (200) ; et

- un arbre de sortie (105) guidé en rotation autour de l'axe (Z) et agencé pour être entrainé en rotation par au moins un des organes tournants du moteur (1).

**2.** Moteur à combustion interne (1) selon la revendication 1, **caractérisé en ce que** l'arbre de sortie (105) est guidé en rotation dans le planétaire couronne (101) par un dispositif de guidage en rotation (107), et rigidement relié sur l'un de ses extrémités à un pignon solaire (106), le satellite (102) comporte une seconde denture apte à engrener avec le pignon solaire (106), l'arbre de sortie (105) étant destiné à être entrainé en rotation autour de l'axe (Z) par le satellite (102).

**3.** Moteur à combustion interne (1) selon la revendication 1, **caractérisé en ce que** chacun des satellites (102,302) est relié à la seconde extrémité de son axe avec le porte-satellite de l'unité opposée par une liaison pivot, de manière à ce que chacun desdits satellites (102,302) soit guidé en rotation autour de son axe à la fois par les deux porte-satellites (103,303), le satellite (302) de l'unité passive (300) étant apte à être entrainé en rotation au même sens et à la même vitesse par le satellite (102) de l'unité active (100).

**4.** Moteur à combustion interne (1) selon la revendication 1, **caractérisé en ce que** la tige (203) dispose d'un premier et d'un second appui ayant chacun une forme demi-cylindrique ouvert dont l'axe est parallèle à l'axe (Z) et étant aptes à coopérer par contact respectivement avec les manetons (I) et (I') empruntant des chemins le long de l'axe principal du piston (202) correspondant à ladite tige (203), la tige (203) étant désolidarisée des bielles (104,304) apte à coopérer avec lesdits manetons (I,I') par simple poussée et d'une manière spontanée lors de la compression, la détente et l'échappement, phases auxquelles la tige (203) est sollicitée en compression.

**5.** Moteur à combustion interne (1) selon la revendication précédente, **caractérisé en ce qu'**il comprend un mécanisme d'accrochage destiné à établir une liaison entre la bielle (304) et la tige (203) durant l'admission, permettant à la bielle (304) de tirer le piston (202) afin de créer la dépression nécessaire à l'aspiration des gaz, et à libérer ladite liaison au plus tard au début de la compression.

**6.** Moteur à combustion interne (1) selon la revendication 4, **caractérisé en ce qu'**il comprend un dispositif amortisseur comprenant des sabots (2031,2033) reliés chacun au premier et au second appui de la tige (203) par une liaison glissière ; et au moins un élément élastique monté entre chacun desdits sabots (2031,2033) et la tige (203) permettant d'amortir le choc entre ladite tige (203) et les manetons I et I' avec lesquels elle coopère au début de la compression et au début de l'échappement.

**7.** Moteur à combustion interne (1) selon la revendication 5, **caractérisé en ce que** ledit mécanisme d'accrochage comprend une rainure taillée sur une surface de la bielle (304) parallèle au plan principal (P), débouchant d'un premier côté appelé côté d'entrée et d'un second côté appelé côté de sortie ; et un doigt solidaire ou issu de matière de la tige (203) apte à coulisser dans ladite rainure pendant la phase d'admission, la rainure est configurée de manière à ce que ledit doigt rentre à travers le côté d'entrée au plus tard au début de la phase d'admission et sorte à travers le côté de sortie au plus tard au début de la phase de compression.

8. Moteur à combustion interne (1) selon la revendication 5, **caractérisé en ce que** l'unité active (100) est destinée, moyennant la bielle (104), à actionner les pistons (202) pour assurer la compression des gaz dans les cylindres (210) correspondants, et à transformer ensuite le travail fourni par le système gazeux en expansion pendant la détente en un couple rotatif à l'arbre de sortie (105), le maneton (I) de la bielle (104) entre en contact avec le premier appuis de la tige (203) d'un piston (202) au moment d'achèvement de l'admission en un premier point de son chemin appelé premier point de basculement PPB, caractérisant le début de la phase de compression, et repousse le piston (202) jusqu'à atteindre son point culminant au PMH auquel la vitesse dudit maneton (I) s'annule et auquel la compression est maximale, la combustion du mélange comburant/carburant ayant lieu au voisinage du PMH, les gaz chauds en expansion repoussent le piston (202) qui à son tour repousse le maneton (I), moyennant la tige (203), jusqu'à la fin de la détente où la tige (203) et le maneton (I) se séparent en un second point appelé second point de basculement SPB, caractérisant le début de la phase d'échappement, la course du piston (202) étant égale à la distance parcourue entre le PMH et le PB correspondant au second point de basculement SPB, ladite distance vaut au moins le rayon primitif du planétaire (101).

9. Moteur à combustion interne (1) selon la revendication précédente, **caractérisé en ce que** l'unité passive (300) est destinée, moyennant la bielle (304), à actionner les pistons (202) pour assurer les phases d'échappement et d'admission, le maneton (I') de la bielle (304) entre en contact avec le second appuis de la tige (203) au moment auquel le maneton (I) atteint le second point de basculement SPB, mettant fin à la phase de détente, et repousse le piston (202) pour chasser les gaz brulés à travers le système d'échappement jusqu'à atteindre le PMH moment auquel la vitesse du maneton (I') s'annule, la liaison entre la tige (203) et la bielle (304) étant établie moyennant ledit mécanisme d'accrochage, permettant à la bielle (304) de tirer le piston (202) pour assurer la phase d'admission, jusqu'au moment auquel le maneton (I) entre en contact avec la tige (203) au premier point de basculement PPB où ladite liaison est au plus tard libérée.

10. Moteur à combustion interne (1) selon la revendication précédente, **caractérisé en ce que** les diamètres primitifs des planétaires (101,301) sont égaux et **en ce que** le premier et le second appui de la tige (203) sont coaxiaux, de manière à se retrouver avec un seul PMH du piston (202) à la fin de compression et à la fin d'échappement.

11. Moteur à combustion interne (1) selon la revendication précédente, **caractérisé en ce que** les porte-satellites (103,303) sont configurés de manière à ce que les axes des satellites (102,302) soient symétriques par rapport à l'axe (Z) du moteur (1) de sorte que le premier et le second point de basculement PPB et SPB de chacun des manetons (I) coïncident avec le point (O), autrement dit les courses de compression et de détente soient identiques au rayon primitif du planétaire (101).

12. Moteur à combustion interne (1) selon la revendication 10, **caractérisé en ce que** les porte-satellites (103,303) sont configurés de manière à ce que les axes des satellites (102,302) et l'axe (Z) du moteur (1) ne soient pas coplanaires de sorte que le premier et le second point de basculement PPB et SPB de chacun des manetons (I) soient symétrique par rapport au point (O) et de sorte que le premier et le second point de basculement PPB et SPB de chacun des manetons (I) soient symétrique par rapport au point (O) et **en ce que** la course de détente soit supérieure au rayon primitif du planétaire (101), autrement dit le piston (202) en détente continu à repousser le maneton (I) au-delà du point (O) jusqu'à atteindre le second point de basculement SPB, la course de compression étant inférieure au rayon primitif du planétaire (101), permettant au moteur (1) de mettre en œuvre le cycle de Miller-Atkinson, **caractérisé par** un volume de détente supérieur à celui de compression.

13. Moteur à combustion interne (1) selon la revendication 9, **caractérisé en ce que** le diamètre primitif du planétaire (301) est supérieur au diamètre primitif du planétaire (101) et **en ce que** les axes du premier et du second appui de la tige (203) sont séparés d'une distance égale à la différence entre les rayons primitifs des planétaire (101,301) de manière à se retrouver avec un seul PMH du piston (202) à la fin de compression et à la fin d'échappement.

14. Moteur à combustion interne (1) selon la revendication précédente, **caractérisé en ce que** les porte-satellites (103,303) sont configurés de manière à ce que les axes des satellites (102,302) et l'axe (Z) du moteur ne soient pas coplanaires et **en ce que** la course de détente est supérieure à la course de compression.

15. Moteur à combustion interne (1) selon la revendication précédente, **caractérisé en ce que** la disposition des axes des satellites (102,302) et le rapport des diamètres primitifs des planétaires (101,301) sont définis de manière à ce que le piston (202) effectue une détente prolongé au-delà du point (O) avec une course de compression au moins égale au rayon primitif du planétaire (101), permettant au moteur (1) de mettre en œuvre le cycle de Miller-Atkinson sans diminution du volume de compression par rapport au volume balayé par le piston (202) parcourant le rayon primitif du planétaire (101).

**Patentansprüche**

1.  Innenverbrennungsmotor (1) mit Planetengetriebe und mit hin- und hergehenden Kolben, mindestens Folgendes beinhaltend:

    • Einen Zylinderblock (200), umfassend:

        ✓ Einen Ring (201), der konfiguriert ist, um eine Anzahl an Zylindern (210) von mindestens gleich eins, die radial um eine Achse (Z) herum angeordnet sind, und starr mit dem Ring (201) verbunden sind, zusammenzufassen, wobei die Achsen der Zylinder (210), die Hauptachsen des Motors (1) genannt werden, an einem Punkt (O) senkrecht zur Achse (Z) sind, die zur Achse (Z) orthogonale, und durch den Punkt (O) verlaufende Ebene Hauptebene (P) genannt wird, und jeder der Zylinder (210) in seinem oberen Teil Folgendes umfasst:

            ◦ Mindestens zwei Ventile (211), wobei eines der beiden Ventile (211) ein Einlassventil ist, und das andere der beiden Ventile (211) ein Auslassventil ist, wobei jedes der Ventile (211) translatorisch entlang seiner Achse in dem Zylinder (210) geführt wird, und anhand einer Feder (214) geschlossen gehalten wird, die zwischen dem Zylinder (210) und einem Federteller (212) montiert ist, die an den Schaft des Ventils (211) anhand einer Passfeder (213) anschlägt, wobei die Feder (214) dazu bestimmt ist, eine Rückstellkraft auf den Federteller (212) auszuüben, um das Ventil (211) geschlossen zu halten;
            ◦ Mindestens zwei Kipphebel (215), die kinematisch mit dem Zylinder (210) verbunden sind, die imstande sind, durch Kontakt mit den Ventilen (211) zusammenzuwirken, und derart angeordnet sind, um die Feder (214) zu verformen, um für die Öffnung der Ventile (211) zu sorgen, wobei jeder Kipphebel (215) durch ein Befestigungssystem, welches eine Einstellung ihrer Position zueinander ermöglicht, fest mit einem Schaft (216) verbunden ist,

        ✓ Im Inneren eines jeden der Zylinder (210) gleitet ein Kolben (202), der koaxial translatorisch in dem entsprechenden Zylinder (210) geführt wird, und dazu bestimmt ist, hin- und hergehende lineare Bewegungen durchzuführen, wobei der Kopf des Kolbens (202) und der Boden des entsprechenden Zylinders (210) eine Verbrennungskammer begrenzen, in der die vier Takte eines Motorzyklus stattfinden, wobei das Volumen der Verbrennungskammer zwischen einem Minimum, das zu einem Zeitpunkt des Zyklus erreicht wird, der einer Position des Kolbens (202) entspricht, der oberer Totpunkt OT genannt wird, und einem Maximum, das zu einem Zeitpunkt des Zyklus erreicht wird, der einer Position des Kolbens (202) entspricht, die unterer punkt UP genannt wird, variabel ist, wobei jede Verbrennungskammer durch ein Einlasssystem für ein Verbrennungsgas und einen Kraftstoff versorgt wird, und in Verbindung mit einem Auslasssystem für die verbrannten Gase ist;
        ✓ Eine Vorrichtung, die zwischen jedem der Kolben (202) und dem entsprechenden Zylinder (210) montiert ist, die es ermöglicht, für die Isolierung und die Dichtheit der Verbrennungskammer zu sorgen;
        ✓ Einen Schaft (203), der fest mit dem Kolben (202) verbunden ist, und angeordnet ist, um sich translatorisch in Längsrichtung entlang der Achse des entsprechenden Kolbens (202) zu verschieben;

    • Mindestens einen radialen Nocken (305), der um die Achse (Z) herum in Drehung geführt wird, der angeordnet ist, um durch mindestens eines der drehenden Organe des Motors (1) in Drehung angetrieben zu werden, und dazu bestimmt ist, jeden der Kipphebel (215) anhand einer Vorrichtung zu betätigen, die mindestens Folgendes beinhaltet:

        ✓ einen Mitläufer (306), der translatorisch in Bezug auf seine Achse geführt wird, der imstande ist, durch Kontakt mit dem Nocken (305) zusammenzuwirken, und dazu bestimmt ist, einer Nockenbahn zu folgen und,
        ✓ einen Kipphebel-Schaft (307), der zwischen dem Mitläufer (306) und dem Schaft (216) montiert ist, und derart angeordnet ist, um die Verschiebebewegungen des Mitläufers (306) auf den Kipphebel (215) zu übertragen, um die Öffnung des Ventils (211) synchron mit der Drehung des Motors (1) anzusteuern,

wobei der radiale Nocken (305) mit mindestens zwei unterschiedlichen Außenprofilen, einem ersten Profil, das die Öffnung der Einlassventile ansteuert, und einem zweiten Profil, das die Öffnung der Auslassventile ansteuert, versehen ist,

**dadurch gekennzeichnet, dass** er Folgendes beinhaltet:

• Mindestens eine aktive Einheit (100), die eine Reihe von Organen umfasst, die derart angeordnet sind, um ein Planetengetriebe zu bilden, das mindestens Folgendes beinhaltet:

✓ ein Hohlrad (101), das koaxial in Bezug auf die Achse (Z) montiert ist, starr mit dem Ring (201) verbunden oder in einem Stück damit ist, und sich auf einer ersten Seite der Hauptebene (P) befindet;

✓ ein Planetenrad (102), dessen Achse parallel zur Achse (Z) verläuft, das mindestens eine erste Verzahnung beinhaltet, die imstande ist, in das Hohlrad (101) einzugreifen und anhand eines Planetenträgers (103), der um die Achse (Z) herum in Drehung geführt wird, auf seiner Umlaufbahn gehalten wird, wobei das Planetenrad (102) an einem ersten Ende seiner Achse, über eine Schwenkverbindung mit dem Planetenträger (103) verbunden ist, wobei der Teilkreisdurchmesser der ersten Verzahnung des Planetenrades (102) gleich einem Teilkreisradius des Hohlrades (101) ist;

✓ die aktive Einheit (100) umfasst weiter ein Pleuel (104), das durch ein Fixierungsmittel, das für eine starre und vollständige Verbindung sorgt, und über eine Anzahl an Pleuelzapfen (I) verfügt, die gleich der Anzahl der Hauptachsen des Motors (1) ist, auf der Achse des Planetenrades (102) montiert ist, die Achsen der Pleuelzapfen (I) parallel zur Achse (Z) verlaufen, durch den Teilkreis der ersten Verzahnung des Planetenrades (102) verlaufen und derart angeordnet sind, dass, wenn sich der Planetenträger (103) um die Achse (Z) dreht, die Projektion der Achse eines jeden der Pleuelzapfen (I) auf der Hauptebene (P) eine geradlinige hin- und hergehende Bewegung entlang einer Hauptachse des Motors (1) ausführt, und dabei ein Segment beschreibt, das Pleuelzapfenbahn (I) genannt wird, deren Mitte der Punkt (O) ist, und deren Länge gleich dem Teilkreisdurchmesser des Hohlrades (101) ist, wobei die aktive Einheit (100) dazu bestimmt ist, durch Kontakt anhand der Pleuelzapfen (I) mit den Schäften (203) zusammenzuwirken, um eine umkehrbare Umwandlung der linearen hin- und hergehenden Bewegungen der Kolben (202) des Zylinderblocks (200) bei ununterbrochener Drehbewegung des Planetenträgers (103) durchzuführen;

• Mindestens eine passive Einheit (300), die eine Reihe von Organen umfasst, die derart angeordnet sind, um ein Planetengetriebe zu bilden, das mindestens Folgendes beinhaltet:

✓ ein Hohlrad (301), das koaxial in Bezug auf die Achse (Z) montiert ist, starr mit dem Ring (201) verbunden oder in einem Stück damit ist, und sich auf der gegenüberliegenden Seite zur ersten Seite der Hauptebene (P) befindet;

✓ ein Planetenrad (302) dessen Achse parallel zur Achse (Z) verläuft, das mindestens eine Verzahnung beinhaltet, die imstande ist, in das Hohlrad (301) einzugreifen, und anhand eines Planetenträgers (303), der um die Achse (Z) in Drehung geführt wird, auf seiner Umlaufbahn gehalten wird, wobei das Planetenrad (302) an einem ersten Ende seiner Achse über eine Schwenkverbindung mit dem Planetenträger (303) verbunden ist, wobei der Teilkreisdurchmesser der Verzahnung des Planetenrades (302) gleich einem Teilkreisradius des Hohlrades (301) ist, der Planetenträger (303) angeordnet ist, um durch mindestens eines der drehenden Organe der aktiven Einheit (100) in Drehung angetrieben zu werden;

✓ die passive Einheit (300) umfasst ein weiteres Pleuel (304), das durch ein Fixierungsmittel, das für eine starre und vollständige Verbindung sorgt und über eine Anzahl an Pleuelzapfen (I') verfügt, die gleich der Anzahl der Hauptachsen des Motors (1) ist, auf der Achse des Planetenrades (302) montiert ist, wobei die Achsen der Pleuelzapfen (I') parallel zur Achse (Z) verlaufen, durch den Teilkreis der Verzahnung des Planetenrades (302) verlaufen und derart angeordnet sind, dass wenn sich der Planetenträger (303) um die Achse (Z) dreht, die Projektion der Achse eines jeden der Pleuelzapfen (I') auf der Hauptebene (P) eine geradlinige hin- und hergehende Bewegung entlang einer Hauptachse des Motors (1) ausführt, und dabei ein Segment beschreibt, das Pleuelzapfenbahn (I') genannt wird, deren Mitte der Punkt (O) ist, und mit einer Länge gleich dem Teilkreisdurchmesser des Hohlrades (301), wobei die passive Einheit (300) dazu bestimmt ist, durch Kontakt anhand der Pleuelzapfen (I') mit den Schäften (203) zusammenzuwirken, um für eine Umwandlung einer ununterbrochenen Drehbewegung des Planetenträgers (303) in hin- und hergehende translatorische Bewegungen der Kolben (202) des Zylinderblocks (200) zu sorgen; und

• eine Ausgangswelle (105), die um die Achse (Z) herum in Drehung geführt wird, und angeordnet ist, um durch mindestens eines der drehenden Organe des Motors (1) in Drehung angetrieben zu werden.

2. Innenverbrennungsmotor (1) nach Anspruch 1, **dadurch gekennzeichnet, dass** die Ausgangswelle (105) in dem Hohlrad (101) durch eine Drehführungsvorrichtung (107) in Drehung geführt wird, und an einem ihrer Enden starr mit einem Sonnenrad (106) verbunden ist, wobei das Planetenrad (102) eine zweite Verzahnung beinhaltet, die imstande ist, in das Sonnenrad (106) einzugreifen, wobei die Ausgangswelle (105) dazu bestimmt ist, durch das Planetenrad (102) um die Achse (Z) herum in Drehung angetrieben zu werden.

3. Innenverbrennungsmotor (1) nach Anspruch 1, **dadurch gekennzeichnet, dass** jedes der Planetenräder (102, 302) am zweiten Ende seiner Achse durch eine Schwenkverbindung mit dem Planetenträger der gegenüberliegenden Einheit derart verbunden ist, dass jedes der Planetenräder (102, 302) durch die beiden Planetenträger (103, 303) gleichzeitig um seine Achse in Drehung geführt wird, wobei das Planetenrad (302) der passiven Einheit (300) imstande ist, durch das Planetenrad (102) der aktiven Einheit (100) in dieselbe Richtung und mit derselben Geschwindigkeit in Drehung angetrieben zu werden.

4. Innenverbrennungsmotor (1) nach Anspruch 1, **dadurch gekennzeichnet, dass** der Schaft (203) über eine erste und über eine zweite Auflage verfügt, die jeweils eine offene halbzylindrische Form aufweist, deren Achse parallel zur Achse (Z) verläuft, und die imstande sind, durch Kontakt jeweils mit den Pleuelzapfen (I) und (I'), die den Bahnen entlang der Hauptachse des Kolbens (202) entsprechend dem Schaft (203) folgen, zusammenzuwirken, wobei der Schaft (203), der von den Pleueln (104, 304) getrennt ist, imstande ist, mit den Pleuelzapfen (I,I') durch einfachen Schub und spontan bei der Kompression, der Entspannung und dem Auslass zusammenzuwirken, welche Phasen sind, in denen der Schaft (203) druckbeansprucht ist.

5. Innenverbrennungsmotor (1) nach dem vorstehenden Anspruch, **dadurch gekennzeichnet, dass** er einen Einhängemechanismus umfasst, der dazu bestimmt ist, beim Einlass eine Verbindung zwischen dem Pleuel (304) und dem Schaft (203) herzustellen, wodurch es dem Pleuel (304) möglich ist, den Kolben (202) zu ziehen, um den nötigen Unterdruck zum Ansaugen der Gase zu schaffen, und die Verbindung spätestens zu Beginn der Kompression freizugeben.

6. Innenverbrennungsmotor (1) nach Anspruch 4, **dadurch gekennzeichnet, dass** er eine Dämpfervorrichtung umfasst, die Klötze (2031, 2033) umfasst, die jeweils durch eine Gleitverbindung mit der ersten und mit der zweiten Auflage des Schaftes (203) verbunden sind; und mindestens ein elastisches Element, das zwischen jedem der Klötze (2031, 2033) und dem Schaft (203) montiert ist, das es ermöglicht, den Stoß zwischen dem Schaft (203) und den Pleuelzapfen I und I', mit denen es zusammenwirkt, zu Beginn der Kompression und zu Beginn des Auslasses abzufedern.

7. Innenverbrennungsmotor (1) nach Anspruch 5, **dadurch gekennzeichnet, dass** der Einhängemechanismus eine Nut umfasst, die auf einer Oberfläche des Pleuels (304) parallel zur Hauptebene (P) eingelassen ist, die auf einer ersten Seite, die Eingangsseite genannt wird, und auf einer zweiten Seite, die Ausgangsseite genannt wird, einmündet; und einen Finger, der fest mit dem Schaft (203) verbunden ist, oder in einem Stück damit ist, der imstande ist, in der Einlassphase in der Nut zu gleiten, die Nut derart konfiguriert ist, dass der Finger durch die Eingangsseite hindurch spätestens zu Beginn der Einlassphase eintritt, und durch die Ausgangsseite hindurch spätestens zu Beginn der Kompressionsphase austritt.

8. Innenverbrennungsmotor (1) nach Anspruch 5, **dadurch gekennzeichnet, dass** die aktive Einheit (100) dazu bestimmt ist, anhand des Pleuels (104) die Kolben (202) zu betätigen, um für die Kompression der Gase in den entsprechenden Zylindern (210) zu sorgen, und danach die Arbeit, die von dem expandierenden Gassystem während der Entspannung bereitgestellt wird, in ein Drehmoment an der Ausgangswelle (105) umzuwandeln, der Pleuelzapfen (I) des Pleuels (104) in Kontakt mit der ersten Auflage des Schaftes (203) eines Kolbens (202) zum Zeitpunkt der Vollendung des Einlasses an einem ersten Punkt seiner Bahn eintritt, der erster Kipppunkt EKP genannt wird, der den Beginn der Kompressionsphase kennzeichnet, und den Kolben (202) zurückschiebt, bis er einen höchsten Punkt am OT erreicht, an dem sich die Geschwindigkeit des Pleuelzapfens (I) annulliert, und an dem die Kompression maximal ist, wobei die Verbrennung des Verbrennungsgas/Kraftstoff-Gemisches in der Nähe des OT stattfindet, wobei die sich ausdehnenden heißen Gase den Kolben (202) zurückschieben, der seinerseits den Pleuelzapfen (I) anhand des Schaftes (203) bis zum Ende der Entspannung zurückschiebt, wo sich der Schaft (203) und der Pleuelzapfen (I) an einem zweiten Punkt trennen, der zweiter Kipppunkt ZKP genannt wird, der den Beginn der Auslassphase kennzeichnet, wobei der Hub des Kolbens (202) gleich der Distanz ist, die zwischen dem OT und dem UP, der dem zweiten Kipppunkt ZKP entspricht, zurückgelegt wird, wobei die Distanz mindestens den Wert des Teilkreisradius des Hohlrades (101) aufweist.

9. Innenverbrennungsmotor (1) nach dem vorstehenden Anspruch, **dadurch gekennzeichnet, dass** die passive Einheit (300) dazu bestimmt ist, anhand des Pleuels (304) die Kolben (202) zu betätigen, um für die Auslass- und Einlassphase zu sorgen, wobei der Pleuelzapfen (I') des Pleuels (304) in Kontakt mit der zweiten Auflage des Schaftes (203) zu dem Zeitpunkt eintritt, an dem der Pleuelzapfen (I) den zweiten Kipppunkt ZKP erreicht, wodurch die Entspannungsphase beendet wird, und den Kolben (202) zurückdrückt, um die verbrannten Gase durch das Auslasssystem hindurch zu treiben, bis der OT erreicht wird, an dem sich die Geschwindigkeit des Pleuelzapfens (I') annulliert, wobei die Verbindung zwischen dem Schaft (203) und dem Pleuel (304) anhand des Einhängemechanismus aufgebaut wird, wodurch es dem Pleuel (304) möglich ist, den Kolben (202) zu ziehen, um für die Einlassphase bis zu dem Zeitpunkt zu sorgen, an dem der Pleuelzapfen (I) in Kontakt mit dem Schaft (203) am ersten Kipppunkt EKP eintritt, wo die Verbindung spätestens freigegeben wird.

10. Innenverbrennungsmotor (1) nach dem vorstehenden Anspruch, **dadurch gekennzeichnet, dass** die Teilkreisdurchmesser der Hohlräder (101, 301) gleich sind, und dadurch, dass die erste und die zweite Auflage des Schaftes (203) koaxial sind, um sich mit einem einzigen OT des Kolbens (202) am Ende der Kompression und am Ende des Auslasses wiederzufinden.

11. Innenverbrennungsmotor (1) nach dem vorstehenden Anspruch, **dadurch gekennzeichnet, dass** die Planetenträger (103, 303) derart konfiguriert sind, dass die Achsen der Planetenräder (102, 302) in Bezug auf die Achse (Z) des Motors (1) parallel sind, sodass der erste und der zweite Kipppunkt EKP und ZKP eines jeden der Pleuelzapfen (I) mit dem Punkt (O) übereinstimmen, das heißt, dass die Kompressions- und Entspannungshübe der gleich dem Teilkreisradius des Hohlrades (101) sind.

12. Innenverbrennungsmotor (1) nach Anspruch 10, **dadurch gekennzeichnet, dass** die Planetenträger (103, 303) derart konfiguriert sind, dass die Achsen der Planetenräder (102, 302) und die Achse (Z) des Motors (1) nicht komplanar sind, sodass der erste und der zweite Kipppunkt EKP und ZKP eines jeden der Pleuelzapfen (I) symmetrisch in Bezug auf den Punkt (O) sind, und sodass der erste und der zweite Kipppunkt EKP und ZKP eines jeden der Pleuelzapfen (I) symmetrisch in Bezug auf den Punkt (O) sind, und dadurch, dass der Entspannungshub größer als der Teilkreisradius des Hohlrades (101) ist, das heißt, der Kolben (202) in kontinuierlicher Entspannung ist, um den Pleuelzapfen (I) über den Punkt (O) hinaus, bis zum Erreichen des zweiten Kipppunktes ZKP, zurückzudrücken, wobei der Kompressionshub kleiner als der Teilkreisradius des Hohlrades (101) ist, wodurch es dem Motor (1) möglich ist, den Zyklus von Miller-Atkinson umzusetzen, der durch ein Entspannungsvolumen gekennzeichnet ist, das größer als jenes der Kompression ist.

13. Innenverbrennungsmotor (1) nach Anspruch 9, **dadurch gekennzeichnet, dass** der Teilkreisdurchmesser des Hohlrades (301) größer als der Teilkreisdurchmesser des Hohlrades (101) ist, und dadurch, dass die Achsen der ersten und der zweiten Auflage des Schaftes (203) um einen Abstand getrennt sind, der gleich der Differenz zwischen den Teilkreisradien der Hohlräder (101, 301) ist, um sich mit einem einzigen OT des Kolbens (202) am Ende der Kompression und am Ende des Auslasses wiederzufinden.

14. Innenverbrennungsmotor (1) nach dem vorstehenden Anspruch, **dadurch gekennzeichnet, dass** die Planetenträger (103, 303) derart konfiguriert sind, dass die Achsen der Planetenräder (102, 302) und die Achse (Z) des Motors nicht komplanar sind und dadurch, dass der Entspannungshub größer als der Kompressionshub ist.

15. Innenverbrennungsmotor (1) nach dem vorstehenden Anspruch, **dadurch gekennzeichnet, dass** die Anordnung der Achsen der Planetenräder (102, 302) und das Verhältnis der Teilkreisdurchmesser der Hohlräder (101, 301) derart definiert sind, dass der Kolben (202) eine verlängerte Entspannung über den Punkt (O) hinaus, mit einem Kompressionshub mindestens gleich dem Teilkreisradius des Hohlrades (101) ausführt, wodurch es dem Motor (1) möglich ist, den Zyklus von Miller-Atkinson ohne Verringerung des Kompressionsvolumens in Bezug auf das Volumen umzusetzen, das von dem Kolben (202) abgefahren wird, der den Teilkreisradius des Hohlrades (101) durchläuft.

**Claims**

1. Internal combustion engine (1) having a planetary gear set and reciprocating pistons including at least:

    • A cylinder block (200) comprising:

✔ a collar (201) being configured to bring together a number of cylinders (210) at least equal to one, disposed radially around an axis (Z) and rigidly connected to the collar (201), the axes of said cylinders (210) called main axes of the engine (1) being perpendicular to the axis (Z) at a point (O), the plane orthogonal to the axis (Z) and passing through the point (O) is called main plane (P), each of said cylinders (210) comprises in its upper part:

∘ At least two valves (211), one of the two valves (211) being an intake valve and the other of the two valves (211) being an exhaust valve, each of said valves (211) is guided in translation along its axis in the cylinder (210) and being maintained closed via a spring (214) mounted between the cylinder (210) and a retainer (212) abutting against the stem of the valve (211) via a lock (213), said spring (214) being intended to exert a restoring force on the retainer (212) in such a way as to maintain the valve (211) closed;
∘ At least two rocker arms (215) kinematically connected to the cylinder (210) capable of cooperating by contact with the valves (211) and being arranged in such a way as to deform the spring (214) to ensure the opening of the valves (211), each rocker arm (215) is integral with a stem (216) by a fastening system allowing an adjustment of their relative position,

✔ Inside each of said cylinders (210) slides a piston (202) guided in coaxial translation in the corresponding cylinder (210) and being intended to carry out reciprocating linear movements, the head of the piston (202) and the bottom of the corresponding cylinder (210) define a combustion chamber in which the four strokes of an engine cycle occur, the volume of said combustion chamber being variable between a minimum, reached at a moment of the cycle corresponding to a position of the piston (202) called top dead center TDC and a maximum reached at a moment of the cycle corresponding to a position of the piston (202) called bottom point BP, each combustion chamber being supplied by an intake system of an oxidizing gas and a fuel and being in communication with an exhaust system of the burnt gases;
✔ A device mounted between each of the pistons (202) and the corresponding cylinder (210) allowing to ensure the insulation and the sealing of the combustion chamber;
✔ A rod (203) integral with the piston (202) and arranged to move in longitudinal translation along the axis of the corresponding piston (202);

• At least one radial cam (305) guided in rotation about the axis (Z) arranged to be driven in rotation by at least one of the rotating members of the engine (1) and being intended to actuate each of the rocker arms (215) via a device including at least:

✔ a follower (306) guided in translation with respect to its axis, capable of cooperating by contact with said cam (305) and being intended to follow a cam path and,
✔ a rocker arm rod (307) mounted between the follower (306) and the stem (216) and being arranged in such a way as to transmit the movements of displacement of the follower (306) to the rocker arm (215) to control the opening of the valve (211) in synchronization with the rotation of the engine (1),

the radial cam (305) being provided with at least two distinct outer profiles, a first profile controlling the opening of the intake valves and a second profile controlling the opening of the exhaust valves,

**Characterized in that** it includes:

• At least one active unit (100) comprising a set of members arranged in such a way as to form an epicyclic gear train including at least:

✔ a ring gear (101) mounted coaxially with respect to the axis (Z), being rigidly connected or derived from material of the collar (201) and being located on a first side of the main plane (P);
✔ a planet gear (102) whose axis is parallel to the axis (Z) including at least one first toothing capable of meshing with the ring gear (101) and being maintained on its orbit by a planet carrier (103) guided in rotation about the axis (Z), the planet gear (102) is connected at a first end of its axis to the planet carrier (103) by a pivot connection, the pitch diameter of the first toothing of the planet gear (102) being equal to the pitch radius of the ring gear (101);
✔ the active unit (100) further comprises a connecting rod (104) mounted on the axis of the planet gear (102) by a fixing means ensuring a rigid and complete connection and having a number of crank pins (I) equal to the number of the main axes of the engine (1), the axes of said crank pins (I) are parallel to the axis (Z), pass through the pitch circle of the first toothing of the planet gear (102) and disposed in such a way that when the planet carrier (103) rotates about the axis (Z), the projection of the axis of each of the crank pins (I) on the main plane (P) carries out a reciprocating rectilinear movement along a main axis of the engine (1) by describing a segment, called path of the crank pin (I), the center of which is the point (O) and the length of which is equal to the pitch diameter of the ring gear (101), the active unit (100) being intended to cooperate by contact via the crank pins (I) with the rods (203) to carry out a reversible transformation of the reciprocating linear movements of the pistons (202) of the cylinder block (200) into a continuous rotational movement of the planet carrier (103);

• At least one passive unit (300) comprising a set of members arranged in such a way as to form an epicyclic gear train including at least:

✓ a ring gear (301) mounted coaxially with respect to the axis (Z), being rigidly connected or derived from material of the collar (201) and being located on the opposite side to the first side of the main plane (P);

✓ a planet gear (302) whose axis is parallel to the axis (Z) including at least one toothing capable of meshing with the ring gear (301) and being maintained on its orbit by a planet carrier (303) guided in rotation about the axis (Z), the planet gear (302) is connected at a first end of its axis to the planet carrier (303) by a pivot connection, the pitch diameter of the toothing of the planet gear (302) being equal to the pitch radius of the ring gear (301), the planet carrier (303) is arranged to be driven in rotation by at least one of the rotating members of the active unit (100);

✓ the passive unit (300) further comprises a connecting rod (304) mounted on the axis of the planet gear (302) by a fixing means ensuring a rigid and complete connection and having a number of crank pins (I') equal to the number of the main axes of the engine (1), the axes of said crank pins (I') are parallel to the axis (Z), pass through the pitch circle of the toothing of the planet gear (302) and disposed in such a way that when the planet carrier (303) rotates about the axis (Z), the projection of the axis of each of the crank pins (I') on the main plane (P) carries out a reciprocating rectilinear movement along a main axis of the engine (1) by describing a segment, called path of the crank pin (I'), the center of which is the point (O) and the length of which is equal to the pitch diameter of the ring gear (301), the passive unit (300) being intended to cooperate by contact via the crank pins (I') with the rods (203) to carry out a transformation of a continuous rotational movement of the planet carrier (303) into reciprocating translational movements of the pistons (202) of the cylinder block (200); and

• an output shaft (105) guided in rotation about the axis (Z) and arranged to be driven in rotation by at least one of the rotating members of the engine (1).

2. Internal combustion engine (1) according to claim 1, **characterized in that** the output shaft (105) is guided in rotation in the ring gear (101) by a rotation guide device (107), and rigidly connected on one of its ends to a sun gear (106), the planet gear (102) includes a second toothing capable of meshing with the sun gear (106), the output shaft (105) being intended to be driven in rotation about the axis (Z) by the planet gear (102).

3. Internal combustion engine (1) according to claim 1, **characterized in that** each of said planet gears (102,302) is connected at the second end of its axis to the planet carrier of the opposite unit by a pivot connection, in such a way that each of said planet gears (102,302) is guided in rotation about its axis by both of the two planet carriers (103,303), the planet gear (302) of the passive unit (300) being capable of be driven in rotation in the same direction and at the same speed by the planet gear (102) of the active unit (100).

4. Internal combustion engine (1) according to claim 1, **characterized in that** the rod (203) has a first and a second support each having an open semi-cylindrical shape, the axis of which is parallel to the axis (Z) and being able to cooperate by contact respectively with the crank pins (I) and (I') following paths along the main axis of the piston (202) corresponding to said rod (203), the rod (203) being disconnected from the connecting rods (104,304) is able to cooperate with said crank pins (1,1') by simple thrust and in a spontaneous manner during compression, expansion and exhaust, phases in which the rod (203) is stressed in compression.

5. Internal combustion engine (1) according to the previous claim, **characterized in that** it comprises a hooking mechanism intended to establish a connection between the connecting rod (304) and the rod (203) during intake, allowing the connecting rod (304) to pull the piston (202) in order to create the vacuum required for the suction of the gases, and to release said connection at the latest at the beginning of the compression.

6.  Internal combustion engine (1) according to claim 4, **characterized in that** it includes a shockabsorber device comprising shoes (2031,2033) each connected to the first and to the second support of the rod (203) by a sliding connection; and at least one elastic element mounted between each of said shoes (2031,2033) and the rod (203) allowing to absorb the shock between said rod (203) and the crank pins I and I' with which it cooperates at the beginning of compression and at the beginning of exhaust.

7.  Internal combustion engine (1) according to claim 5, **characterized in that** said hooking mechanism comprises a groove cut into a surface of the connecting rod (304) parallel to the main plane (P), opening on a first side called input side and on a second side called output side; and a finger integral with or derived from material of the rod (203) capable of sliding in said groove during the intake phase, the groove is configured in such a way that said finger enters through the input side at the latest at the beginning of the intake phase and exits through the output side at the latest at the beginning of the compression phase.

8.  Internal combustion engine (1) according to claim 5, **characterized in that** said active unit (100) is intended, by means of the connecting rod (104), to actuate the pistons (202) to ensure the compression of the gases in the corresponding cylinders (210), and to then transform the work provided by the expanding gaseous system during expansion into a rotary torque at the output shaft (105), the crank pin (I) of the connecting rod (104) comes into contact with the first support of the rod (203) of a piston (202) at the moment of completion of intake at a first point of its path called first tipping point FTP, characterizing the beginning of the compression phase, and pushes the piston (202) until it reaches its highest point at TDC at which the speed of said crank pin (I) is canceled out and at which the compression is maximum, the combustion of the oxidizer/fuel mixture taking place in the vicinity of TDC, the expanding hot gases push the piston (202) which in turn pushes the crank pin (I), by means of the rod (203), until the end of expansion where the rod (203) and the crank pin (I) separate at a second point called second tipping point STP, characterizing the beginning of the exhaust phase, the stroke of the piston (202) is equal to the distance travelled between TDC and the BP corresponding to the second tipping point STP, said distance is equal to at least the pitch radius of the ring gear (101).

9.  Internal combustion engine (1) according to the previous claim, **characterized in that** the passive unit (300) is intended, by means of the connecting rod (304), to actuate the pistons (202) to ensure the exhaust and intake phases, the crank pin (I') of the connecting rod (304) comes into contact with the second support of the rod (203) at the moment at which the crank pin (I) reaches the second tipping point STP, ending the expansion phase, and pushes the piston (202) to eject the burnt gases through the exhaust system until it reaches TDC, at which the speed of the crank pin (I') is cancelled out, the connection between the rod (203) and the connecting rod (304) being established by means of said hooking mechanism, allowing the connecting rod (304) to pull the piston (202) to ensure the intake phase, until the moment at which the crank pin (I) comes into contact with the rod (203) at the first tipping point FTP where said connection is at the latest released.

10. Internal combustion engine (1) according to the previous claim, **characterized in that** the pitch diameters of the ring gears (101,301) are equal and **in that** the first and second support of the rod (203) are coaxial in such a way as to end up with a single TDC of the piston (202) at the end of compression and at the end of exhaust.

11. Internal combustion engine (1) according to the previous claim, **characterized in that** said planet carriers (103,303) are configured in such a way that the axes of the planet gears (102,302) are symmetrical with respect to the axis (Z) of the engine (1) so that the first and the second tipping point FTP and STP of each of the crank pins (I) coincide with the point (O), in other words the compression and expansion strokes are identical to the pitch radius of the ring gear (101).

12. Internal combustion engine (1) according to claim 10, **characterized in that** said planet carriers (103,303) are configured in such a way that the axes of the planet gears (102,302) and the axis (Z) of the engine (1) are not coplanar so that the first and the second tipping point FTP and STP of each of the crank pins (I) are symmetrical with respect to the point (O) and so that the first and the second tipping point FTP and STP of each of the crank pins (I) are symmetrical with respect to the point (O) and **in that** the expansion stroke is greater than the pitch radius of the ring gear (101), in other words the expanding piston (202) continues to push the crank pin (I) beyond the point (O) until it reaches the second tipping point STP, the compression stroke being smaller than the pitch radius of the ring gear (101), allowing the engine (1) to implement the Miller-Atkinson cycle, **characterized by** an expansion volume greater than that of compression.

13. Internal combustion engine (1) according to claim 9, **characterized in that** the pitch diameter of the ring gear (301) is greater than the pitch diameter of the ring gear (101) and **in that** the axes of the first and the second support of the rod (203) are separated by a distance equal to the difference between the pitch radii of the ring gears (101,301) in such a way as to end up with a single TDC of the piston (202) at the end of compression and at the end of exhaust.

14. Internal combustion engine (1) according to the previous claim, **characterized in that** said planet carriers (103,303) are configured in such a way that the axes of the planet gears (102,302) and the axis (Z) of the engine (1) are not coplanar and **in that** the expansion stroke is greater than the compression stroke.

15. Internal combustion engine (1) according to the previous claim, **characterized in that** the arrangement of the axes of the planet gears (102,302) and the ratio of the pitch diameters of the ring gears (101,301) are defined in such a way that the piston (202) carries out a prolonged expansion beyond the point (O) with a compression stroke at least equal to the pitch radius of the ring gear (101), allowing the engine (1) to implement the Miller-Atkinson cycle without reduction of the compression volume with respect to the volume swept by the piston (202) traveling the pitch radius of the ring gear (101).

**Fig. 1**

Fig. 3

Fig. 2

Fig. 4

Fig. 5

Fig. 6

Fig. 8

Fig. 7

**Fig. 9**

204

202

203

Doigt

**Fig. 12**

A
B

B
A

**Fig. 11**

**Fig. 13**

A-A

**Fig. 10**

**Fig. 14**

B-B

Fig. 15

Fig. 16

Fig. 18

Fig. 17

Coupe A-A

Fig. 19

**Fig. 20**

Fig. 21

Fig. 22

Fig. 23

Fig. 24

Coupe A-A

301

Fig. 25

201

101

Fig. 27

A

A

Fig. 26

Coupe A-A

Z

P

O

Fig. 28

**Fig. 29**

Fig. 30

Fig. 32

Fig. 31

301

303

102

104

101

103

105

304

302

106

A

A

Coupe A-A

Fig. 33

P

Z

216

307

1

306

Fig. 34

Fig. 36

Fig. 35

203

304

104

203

**Fig. 37**

R2

β

R1

**Fig. 38**

a

b

c

d

**Fig. 39**

Fig. 41

Fig. 40

Fig. 43

Fig. 42

Expl.

**Fig. 45**

Aspir.

Echap.

Compr.

**Détente**

**Fig. 44**

46

**Fig. 46**

**Fig. 47**

**Fig. 48**

**Fig. 49**

**Fig. 50**

EP 3 983 647 B1

305

104

304

**Fig. 52**

90° - δ

Aspiration

Fin

Début

Fin

Échappement

Début

90° + δ

305

**Fig. 51**

Fig. 54

Fig. 53

**Fig. 55**

Aspir.

Vréf

Détente

Vd

Va  a

a  Vréf

Détente

Echap.

**Fig. 56**

Compr.

Détente

Echap.

Echap.

EP 3 983 647 B1

**Fig. 57**

**Fig. 58**

**Fig. 60**

**Fig. 59**

Fig. 62

Fig. 65

Fig. 64

Fig. 61

Fig. 63

302

304

303

305

202

203

103

$90° - \psi$

$90° - \xi$

$\psi$

$\xi$

$\psi$

$\psi$

$\psi$

$L_p$

$L_p - L_a$

Fig. 66

301

201

101

Fig. 68

A

A

Fig. 67

Fig. 69

A-A

∅p

∅a

54

Fig. 71

Fig. 70

**Fig. 72**

100

**Fig. 73**

**Fig. 74**

Fig. 76

Fig. 75

Fig. 78

Fig. 77

Fig. 80

Fig. 79

**Fig. 83**

**Fig. 82**

**Fig. 81**

**Fig. 84**